# EUROPEAN PATENT SPECIFICATION

(11) **EP 3 472 230 B1**
(45) Date of publication and mention of the grant of the patent: **21.02.2024**
(21) Application number: 17734424.9
(22) Date of filing: 21.06.2017
(51) Int. Cl.: C08H 1/00, D01B 3/00, C08L 89/00

(54) **PROCESS FOR PROCESSING FEATHERS**
VERFAHREN ZUR VERARBEITUNG VON FEDERN
PROCÉDÉ DE TRAITEMENT DE PLUMES

(30) Priority: 21.06.2016 GB 201610852
(43) Date of publication of application: 24.04.2019
(73) Proprietor: Aeropowder Limited, London HA0 1HX (GB)
(72) Inventor: DIECKMANN, Elena, London Greater London EC1V 2NX (GB)
(74) Representative: Barker Brettell LLP
(86) International application number: PCT/GB2017/051827
(87) International publication number: WO 2017/221015

(56) References cited:
- CA-A1- 2 217 853
- US-A- 2 809 400
- US-A1- 2003 075 289

## Description

The present invention relates to a process for obtaining a powder comprising keratin, and to uses of a powder as obtainable by such a process. The present invention also relates to a process for obtaining fibrillated fibres comprising keratin, and to a fibrillated fibre blend as obtainable by such a process, and to uses of the fibrillated fibre blend.

### Background to the invention

Keratin is a naturally occurring protein and can be found in hair, nails, epidermis, hoof, horn, and feathers (Vincent, J., Structural Biomaterials, Princeton University Press, 1990).

Keratin contains a large amount of cysteine relative to other proteins. (Fraser, R. D. B., et al., Keratins: Their Composition, Structure, and Biosynthesis, Charles C. Thomas Publisher, 1972, p. 31). Cysteine is a sulphur-containing amino acid and can form sulphur-sulphur (S-S) bonds or "cross-link" with other intra-or inter-molecular cysteine molecules. The cross-links, plus other structural features like crystallinity and hydrogen-bonding, give keratin very good physical properties (Fraser, R.D.B., and T.P. MacRae, Molecular structure and mechanical properties of keratins, Symposia of the Society for Experimental Biology, Number XLIV: The Mechanical Properties of Biological Materials, Cambridge University Press, 1980, p. 211-246). In particular, it has good tensile strength and physical and chemical stability.

The amount of cysteine varies depending on the keratin source. Wool keratin contains about 15% cysteine, while feather keratin contains about 7% cysteine. Feather keratin has a molecular weight of about 10,500 g/mol. (Fraser, R. D. B., et al., 1972; K. M. Arai, K. M., et al., Eur. J. Biochem., 132: 501, 1983). Feathers are typically composed of about 50wt% feather quill (the central feather shaft, also known as the calamus) and about 50wt% feather barb material (the feather fibre).

Feathers are made up of many slender, closely arranged parallel barbs forming a vane on either side of a tapering hollow shaft (the quill). The barbs have bare barbules (extensions from the barbs) which in turn bear barbicels commonly ending in hooked hamuli and interlocking with the barbules of an adjacent barb to link the barbs into a continuous vane. The vanes provide the feather barb material (the feather fibre).

A typical poultry feather fibre length is about 2 to 3 cm.

The poultry industry generates feathers as a waste product, with the UK poultry industry generating more than 100,000 tonnes per annum of chicken feathers alone. Traditionally, feather waste was converted into feather meal and used as low-grade animal feed. However, since the BSE (bovine spongiform encephalopathy) crisis there has been little or no market for such a product in Europe.

Feather waste consists of insoluble fibre, soluble protein, fat and water. The insoluble fibre portion of the feather consists primarily of the proteins keratin and collagen.

Feathers contain about 90% keratin protein. Feather keratin is composed of ordered α-helix or β-sheet structures and some other disordered structures. Feather barb material has a higher percentage of α-helix compared to β-sheet, while the quill is composed of more β-sheet than α-helix structure.

In addition, feather meal can be deficient in essential amino acids and difficult for animals to digest.

Therefore in addition to large quantities of feathers being made into feather meal, significant amounts of feathers end up in landfill or incinerators as industrial waste.

US 2003/075289 discloses a method and a composition for processing poultry feathers.

US 2809400 discloses an apparatus for producing loose fibres from fibrous materials.

CA 2217853 discloses a method of making fiber from feathers. This document also discloses fibers derived from feathers, a composition comprising fibers derived from feathers and one or more additives, methods of making fiber pulp, and compositions comprising fiber pulp.

### Summary of the Invention

The present inventors recognised that there is limited commercial use of the feathers, e.g. chicken, duck, turkey and goose feathers, which are obtained as waste during poultry processing. It has been realised that there would be both an environmental and commercial benefit to identifying new routes for making use of these feathers.

The invention provides, in a first aspect, a process for obtaining a powder comprising keratin. The process is defined by claim 1 wherein option (ii) applies. The process therefore comprises the steps of:
a) providing whole feathers in a non-chemically treated form;
b) washing the whole feathers as obtained from step a) with an aqueous liquid at elevated temperature, to obtain whole washed feathers;
c) drying the whole washed feathers as obtained from step b) to obtain whole dried feathers;
d) milling the whole dried feathers as obtained from step c) with a mill having a grinding action so as to obtain powdered feather barb material together with whole feather quills, wherein the powdered feather barb material has a particle size distribution such that its particles are all sized within the range of from 50 to 850 µm, e.g. from 50 to 800 µm; and
e) separating the powdered feather barb material as obtained from step d) from the whole feather quills.

This aspect of the present invention is beneficial in that it leads to a product where the powdered material is only feather barb material. Prior methods would chop or crush the feather barb and the quill together. The properties of the feather barb and the quill are different and therefore the properties of a powdered product that is solely feather barb material are different from a mixture of crushed or chopped feather barb and quill. The powdered feather barb material that does not contain chopped or crushed quill is particularly suitable for a number of end-uses, e.g. as biodegradable filler, an insulation additive, packaging material; or water-repellent additive.

The powdered material may also be described as micro-fibre material.

It is straightforward to remove the whole quills from the powdered feather barb material, e.g. by sieving, and does not add cost or complexity to the process.

The process also avoids the need for chemical treatment of the feathers before milling and therefore the process is environmentally friendly and cost effective. Feather waste is usually a mixture of different feather kinds; the present invention allows the heterogeneous mix of feathers with different properties to be utilised without needing any separation or sorting, which is both cost saving and energy saving.

It will be appreciated that a feather-based product can be obtained by carrying out the method of the first aspect, which is a mixture of powdered feather barb material together with whole feather quills, wherein the powdered feather barb material has a particle size distribution such that its particles are all sized within the range of from 50 to 850 µm, e.g. from 50 to 800 µm.

Although feathers have oils on the surface of the feathers, and have some hydrophobicity from the barb structure and keratin itself, it will be appreciated that some amino acids are hydrophilic, and therefore the raw feather material is not purely hydrophobic. It has been determined by the present inventors that there may be a certain degree of inherent hydrophobicity in particles of powdered feather barb material.

The invention provides, in a second aspect, the use of powder as obtained by the process of the first aspect as: biodegradable filler; or an insulation additive; or packaging material; or a water-repellent additive. This use is defined in claim 11.

In one embodiment the use is as: biodegradable filler; or an insulation additive; or packaging material.

The invention provides, in a third aspect, a process for obtaining biodegradable filler as defined in claim 12, option a). The process comprises:
- carrying out the process of the first aspect, wherein in step d) the milling is carried out so as to obtain powdered feather barb material that has a particle size distribution such that its particles are all sized within the range of from 50 to 300 µm, such as from 50 to 200 µm.

In one embodiment, the powdered feather barb material is then combined with a resin and/or binder in powder or liquid form.

The invention provides, in a fourth aspect, a process for obtaining an insulation material, as defined in claim 12, option b). The process comprises:
- carrying out the process of the first aspect wherein in step d) the milling is carried out so as to obtain powdered feather barb material that has a particle size distribution such that its particles are all sized within the range of from 600 to 850 µm, e.g. from 600 to 800 µm, such as from 700 to 850 µm, e.g. from 700 to 800 µm.

In one embodiment, the powdered feather barb material is then combined with a polymer.

The invention provides, in a fifth aspect, a process for obtaining a packaging material, as defined in claim 12, option c). The process comprises:
- carrying out the process of the first aspect wherein in step d) the milling is carried out so as to obtain powdered feather barb material that has a particle size distribution such that its particles are all sized within the range of from 600 to 850 µm, e.g. from 600 to 800 µm, such as from 700 to 850 µm, e.g. from 700 to 800 µm.

In one embodiment, the powdered feather barb material is then combined with a polymer and formed into a packaging article.

The invention provides, in a sixth aspect, a process for obtaining a water-repellent material, as defined in claim 12, option d). The process comprises:
- carrying out the process of the first aspect wherein in step d) the milling is carried out so as to obtain powdered feather barb material that has a particle size distribution such that its particles are all sized within the range of from 50 to 300 µm, such as from 50 to 200 µm.

The present invention also provides a further beneficial process for making commercial use of feathers, e.g. chicken, duck, turkey and/or goose feathers.

In this regard, the invention provides, in a seventh aspect, a process for obtaining fibrillated fibres comprising keratin. The process is defined by claim 1 wherein option (i) applies. The process comprises the steps of:
a) providing whole feathers in a non-chemically treated form;
b) washing the whole feathers as obtained from step a) with an aqueous liquid at elevated temperature, to obtain whole washed feathers;
c) drying the whole washed feathers as obtained from step b) to obtain whole dried feathers;
d) milling the whole dried feathers as obtained from step c) with a hammer mill using a plurality of rotating hammers to force the feathers against a curved grinding surface having raised teeth, wherein each rotating hammer has a hammer tip and the minimum clearance as a hammer tip passes over the grinding surface defines a grinding gap, wherein the grinding gap is from 1mm to 6mm, and whereby the ground feather material is forced out of the mill through screen perforations by the action of the rotating hammers, whereby the screen perforations are substantially circular with a diameter of from 3mm to 10mm,
so as to obtain a fibrillated fibre blend comprising both fibrillated feather barb material and fibrillated feather quills.

The fibres as produced during this process are fibrillated. As the skilled person will appreciate, a fibrillated fibre is one that has been processed to develop a branched structure and thus a higher surface area. This is therefore a fibre product with fibrils extending off from the main fibre body in multiple different directions.

This fibrillated structure can be seen by scanning electron microscopy (SEM). An SEM image of the fibres as produced by this process will show that there is a main fibre body with a plurality of fibrils extending off that body at different locations along its length, and with those fibrils extending in multiple (e.g. three or more, or five or more, or ten or more) different directions. In particular, when considering the main fibre body as extending in the z direction, then when looking in the x-y plane there are fibrils extending at multiple (e.g. three or more, or five or more, or ten or more) different angles in that plane, from 0 to 360 degrees. Equally, when considering the angle of the fibrils to the elongate axis of the main fibre body, there are fibrils extending at multiple (e.g. three or more, or five or more, or ten or more) different angles to that axis, over the range of from greater than 0 to less than 180 degrees.

The use of the specific hammer mill process as defined in step d) has been found to give rise to this specific fibrillated form of fibres obtained from a feather product. This is beneficial and unexpected.

Without being bound by theory, it is believed that by using a hammer mill, which carries out a `cross beating' milling of the material, under the stated process parameters, the feather is disintegrated in a specific manner that leads to this three dimensional fibre structure. In this regard, it is believed that the quill disintegrates, the barbs unfold from the quill, the barbules unfold from the barb, and the hooklets unfold from the barbules, and there is a cutting action that leads to feather fragments with an increased overall surface area and fibre distribution.

The hammer mill, in contrast to a cutting mill, introduces abrasive and targeted compressive forces. This has the effect of opening up the feather fibres to create a three dimensional product as compared to a flat, 2D feather. It also generates crimping and maximises the contact surface area of the resulting fibre product.

The fibrillated fibre blend has characteristics that make it particularly suitable for use as the fibre in an air-laid composite product comprising fibre and binder. This is in particular noticeable for, but not limited to, an air-laid composite product comprising fibre and binder where the binder is a polymer in fibre form, e.g. a bi-composite fibre.

An air-laid product will ideally have a uniform distribution of the fibrous material, to ensure coherent thermal and structural performance throughout the product. A benefit of the fibrillated fibre blend as obtained by the invention is that the fibrillated feather fibres can be well dispersed in the airflow during an air-laid process. In particular, clumping of fibres in the air carding process is avoided. Further, the feather fibres stay airborne for a longer amount of time as compared using whole feathers. This is advantageous because it allows for improved mixing with polymeric fibres, such as bi-component fibres.

The variable properties between individual feathers and between different sections within a feather will result in the production of fibrillated feather fibres with heterogeneous physical properties. However, as a bulk material, the fibrillated fibre blend as obtained by the invention has an overall homogenous behaviour that is desirable for ease of manufacturing. This is, therefore, a further technical benefit.

In addition, it is known that the thermal performance of an air-laid product varies with density. Too low a density decreases insulative properties, due to thermal airflows through the structure of the material, but too high a density decreases thermal performance due to excessive mass and thermal bridging. Therefore there is an optimum density for an air-laid non-woven product.

The aim for a non-woven product based on feather fibres or the like would be a density of 40-50 kg/m³. It has been determined that by using a hammer mill, which carries out a `cross beating' milling of the material, under the stated process parameters, the resultant fibrillated fibres have a three dimensional microstructure that allows for the fibres to arrange themselves in a three-dimensional air-laid web in a manner that does not result in fibre-compaction or fibre alignment.

Fibrillated fibres can therefore form a non-woven product with the desired density of 40-50kg/m³. This is not achievable with whole feathers. Further, using whole feathers would require several pre-forming stages to achieve a uniform product.

As noted above, the hammer mill, in contrast to a cutting mill, introduces abrasive and targeted compressive forces. This has the effect of opening up the feather fibres to create a three dimensional product as compared to a flat, 2D feather. This has the benefit of maximizing the contact surface area available. This is technically significant, because it increases the surface area available for polymer to anchor to the feather fibres during the production of a composite product. This can lead to a more robust product with good structural performance. A further benefit is that less binder is needed to hold a given mass of feather fibres together.

Hollow feather fibres are highly insulating, making the curing of thick air-laid webs more difficult. Therefore a double belt oven system is often needed to cure the web. It is therefore significant that less binder is needed when using the fibrillated feather fibres of the present invention, because if less binder is needed then it is also the case that less overall thermal energy is needed to cure the composite material. Being able to use lower temperatures is beneficial from an environmental and cost perspective. In addition, it is beneficial to be able to use lower curing temperatures to achieve sufficient curing when feathers are being used as the fibrous material, because high temperatures can lead to thermal degradation of keratin.

A further benefit of needing less binder is that the proportion of feather fibre material in the composite product is higher. The feather fibres are more insulating than the binder. Therefore the thermal performance is improved when the content of feather fibre is maximised. Thermal bridging through the polymeric material is kept to a minimum.

A yet further advantage of the process of the seventh aspect is that it avoids the need for chemical treatment of the feathers before milling and therefore the process is environmentally friendly and cost effective.

Feather waste is usually a mixture of different feather kinds; the present invention allows the heterogeneous mix of feathers with different properties to be utilised without needing any separation or sorting, which is both cost saving and energy saving.

The invention provides, in an eighth aspect, a fibrillated fibre blend as defined in claim 2. The blend comprises both fibrillated feather barb material and fibrillated feather quills, wherein either the blend is obtainable by the process of the seventh aspect or the blend has been obtained by the process of the seventh aspect.

This is therefore a blend of fibres where the fibres have fibrils extending off from the main fibre body in multiple different directions.

The invention provides, in a ninth aspect, the use of a fibrillated fibre blend as obtained by the process of the seventh aspect, or the fibrillated fibre blend of the eighth aspect, as a biodegradable filler, an insulation additive, a packaging material; or a flame retardant material, or as the fibrous material in an air-laid product. This use is claimed in claim 3.

The invention provides, in a tenth aspect, a process for obtaining a composite product, as defined in claim 4. The process comprises:
i) providing a fibrillated fibre blend according to the eighth aspect;
ii) combining the fibrillated fibre blend with a binder to form a composite material; and
iii) processing the composite material to form a composite product.

In one embodiment step i) comprises carrying out the process of the seventh aspect to obtain a fibrillated fibre blend.

The invention provides, in an eleventh aspect, a composite product as obtained by the process of the tenth aspect. This product is defined in claim 8.

In one embodiment the composite product may be a filler, padding or liner product, or an insulation product, or a packaging product.

In one embodiment the composite product is in the form of a board or a rollable layer or a mat or a batt.

### Brief Description of the Drawings

**Figures 1a, 1b and 1c** illustrate a ball mill with grinding balls and the stages in ball milling the feathers according to the first aspect of the invention;
**Figure 1d** is a schematic drawing illustrating that in the first aspect of the invention the feather barb of the feather becomes powdered feather;
**Figure 1e** shows an SEM image of powder obtained according to the first aspect of the invention;
**Figure 1f** shows a photograph of powder obtained according to the first aspect of the invention;
**Figure 2a** illustrates a hammer mill and the stages in hammer milling the feathers according to the seventh aspect of the invention;
**Figure 2b** shows detail of the hammer mill of Figure 2a, illustrating the hammer tip and the grinding surface with raised teeth;
**Figures 3a****-e** show SEM images of the fibrillation process according to the seventh aspect of the invention;
**Figures 4a and 4b** illustrate graphically the effect of the fibrillation process and the changing of the feather from a 2D to a 3D feature structure during the process of the seventh aspect of the invention;
**Figure 4c** is an SEM image showing the fibrillation in the feather fibres produced according to the process of the seventh aspect of the invention;
**Figure 5** illustrates a system for air laying according to the tenth aspect of the invention;
**Figure 6** is a close up schematic of the air-laid composite material produced according to the tenth aspect of the invention in which bi-component fibres are connected to fibrillated feather fibres, and an SEM image of said air-laid composite material; and
**Figure 7** is an SEM of the air-laid composite product produced in the examples according to the tenth aspect of the invention, in which bi-component fibres are fused with fibrillated feather fibres.

### Detailed Description of the Invention

### First to Sixth Aspects

In the process of the invention for obtaining a powder comprising keratin, as defined in claim 1 option (ii), whole feathers are provided in a non-chemically treated form. Preferably the feathers as provided in step a) are a by-product from a poultry-processing plant. The term "poultry" is intended to refer to any kind of domesticated bird, captive-raised for its utility, and includes but is not limited to, chickens, turkeys, geese and ducks.

In the embodiment where the feathers that are used are a by-product from a poultry-processing plant, the feathers are collected while still fresh (less than 24-hours after being plucked from the bird, e.g. less than 12-hours after being plucked). These are either used directly in the present process or alternatively are rinsed with water, and then stored in a cool environment (e.g. from 5 to 20 degrees C) which is preferably not in direct sunlight before being used in the present process.

It is important in the present invention that the feathers as used in a non-chemically treated form. Therefore they have been plucked from the bird and either are used directly or alternatively the only processing of the feathers after plucking is one or more of rinsing, drying and storing.

In the present invention it is intended that the feathers as provided in step a) are whole, i.e. they include the two vanes attached on either side of the quill. In addition, it is intended that the feathers remain in whole form during steps b) and c). It is intended that the feathers should be whole, with two vanes still being attached on either side of the quill, when they are milled in step d).

In one embodiment of the process of the first aspect, steps a) to e) are carried out at the poultry-processing plant. In another embodiment steps a) to c) are carried out at the poultry-processing plant and the dried feathers as obtained from step c) are then transported from the poultry-processing plant to a separate treatment location before carrying out steps d) and e). In another embodiment feathers are transported from a poultry-processing plant to a separate treatment location before carrying out steps a) to e) of the process of the present invention.

Any one or more of the steps of the process of the first aspect may be carried out batch-wise or continuously. In particular, the milling step d) may be carried out as a batch process or may be run as a continuous process.

Feathers from any avian species may be used, but examples are feathers from chickens, turkeys, quails, ducks, geese, pigeons, doves, pheasants, emus, swans, and ostriches. In one embodiment, the feathers are from chickens or ducks or geese or turkeys.

The term "feather" includes, but is not limited to, primary feathers, secondary feathers, tail feathers, contour feathers, down feathers, filoplumes, semiplume feathers, and bristle feathers.

In step b) the feathers as obtained from step a) are washed with an aqueous liquid at elevated temperature. In one embodiment the elevated temperature is 30 degrees C or more, such as 40 degrees C or more or 50 degrees C or more. In one embodiment the elevated temperature is 60 degrees C or more, such as 70 degrees C or more or 80 degrees C or more. It may be that the elevated temperature is from 50 to 150 degrees C, such as from 60 to 130 degrees C or from 70 to 120 degrees C. In one embodiment the elevated temperature is from 70 to 110 degrees C, such as from 75 to 100 degrees C or from 80 to 100 degrees C.

The aqueous liquid may comprise water and surfactant, for example it may comprise 90wt% or more water and from 0.1 to 10wt% surfactant. In one embodiment it comprises 95wt% or more water and from 0.5 to 5wt% surfactant, e.g. 97wt% or more water and from 0.5 to 3wt% surfactant.

The surfactant may be anionic or cationic or non-ionic. The surfactant may, for example, be an anionic surfactant such as an alkylbenzenesulfonate, for example a C8-C24 alkylbenzenesulfonate, especially a C8-C18 alkylbenzenesulfonate, in particular a C10, 11 or 12 alkylbenzenesulfonate. In one embodiment it is a linear alkylbenzenesulfonate. The surfactant may alternatively be a non-ionic surfactant, such as a primary alcohol ethoxylate surfactant (e.g. a C8-C24 primary alcohol ethoxylate, especially a C8-C18 primary alcohol ethoxylate, such as a C10, 11 or 12 primary alcohol ethoxylate) or an alkylphenol ethoxylate surfactant (e.g. a C8-C24 alkylphenol ethoxylate, especially a C8-C18 alkylphenol ethoxylate, such as a C10, 11 or 12 alkylphenol ethoxylate). However, the present invention is not limited to a specific surfactant type and the skilled person will be aware of surfactants as used in domestic and industrial settings that can wash animal-derived materials such as wool and feathers.

The aqueous liquid may comprise a disinfecting agent. For example, the disinfecting agent may be hydrogen peroxide or derivatives thereof (such as sodium percarbonate).

The disinfecting agent may be used in the aqueous liquid at a level of from 0.01wt% to 5wt%, e.g. from 0.05wt% to 4wt%, such as from 0.1wt% to 3wt%.

The aqueous liquid may also comprise one or more enzymes, as is known in biological detergents. These may suitably be alkaline enzymes. For example, the enzymes may be one or more of α-amylase, cellulase, protease, lipase and mannase. Enzymes that are suitable for use in this regard are described in Methods in Biotechnology, Vol. 17: Microbial Enzymes and Biotransformations, 2005, pp 151-161.

The enzymes may be used in the aqueous liquid at a level of from 0.0001wt% to 0.5wt%, e.g. from 0.0005wt% to 0.1wt%, such as from 0.001wt% to 0.02wt%.

Optionally one or more flame-retardant agent may be added to the feathers before or after milling. In one embodiment this is added during step b). This may be added through bath impregnation or spray impregnation.

The flame-retardant agent may be selected from additives such as potassium hexafluorozirconate, organic phosphorus nitrogen compounds, organic phosphorus compounds, sodium salts of tetrabromophthalic acids, and combinations thereof.

Optionally one or more moth-proofing agent may be added to the feathers before or after milling. In one embodiment this is added during step b). This may be added through bath impregnation or spray impregnation.

The moth-proofing agent may be selected from insecticides such as synthetic pyrethroids (e.g. empenthrin, salifluofen, acrinathrin, transfluthrin, d-phenothrin or metofluthrin).

Optionally one or more deodorant agent may be added to the feathers before or after milling. In one embodiment this is added during step b). This may be added through bath impregnation or spray impregnation.

The washing step, with or without additive application, may be carried out for 30 minutes or more, such as an hour or more or 90 minutes or more. In one embodiment the washing step is carried out for from 1 to 5 hours, such as from 1 to 3 hours.

In step c) the washed feathers as obtained from step b) are dried. This may involve heating to a temperature of 50 degrees C or more, such as 60 degrees C or more or 70 degrees C or more. It may be that the heating is from 50 to 150 degrees C, such as from 60 to 130 degrees C or from 70 to 120 degrees C. In one embodiment the heating is from 70 to 110 degrees C, such as from 75 to 100 degrees C or from 80 to 100 degrees C.

The heating may be carried out in an oven or other suitable equipment. In one embodiment, step c) is carried out at the poultry-processing plant and the heating is carried out using waste heat from the poultry-processing plant.

The heating may be carried out for an hour or more, such as two hours or more or three hours or more, or four hours or more. In one embodiment the heating is carried out for from 2 to 48 hours, such as from 4 to 40 hours or from 8 to 36 hours or from 10 to 30 hours.

It may be that the feathers undergo spin drying before heating, in order to remove excess moisture. For example, the feathers may be spin dried for 2 minutes or more, such as 3 minutes or more or 4 minutes or more or 5 minutes or more. In one embodiment the feathers may be spin dried for from 2 minutes to 1 hour, such as from 5 minutes to 30 minutes.

The spinning may be at any suitable speed, e.g. from 500 to 1500rpm, such as from 700 to 1400rpm or from 800 to 1300rpm or from 900 to 1200rpm.

Preferably in step c) 90wt% or more of the aqueous liquid from washing is removed from the feathers, such as 95wt% or more or 98wt% or more or 99wt% or more or 99.5wt% or more.

In one embodiment, the feathers are weighed before step b) and are weighed again after step c), to ensure that most or all of the moisture from the washing step has been removed.

In step d) of the process of the first aspect a dry milling process is used to generate a keratin-based powder from the feathers. In this regard, a mill having a grinding action is used, so as to obtain powdered feather barb material together with whole feather quills, wherein the powdered feather barb material has a particle size distribution such that its particles are all sized within the range of from 50 to 850 µm, e.g. from 50 to 800 µm. The grinding action is used such that the milling process has a gradual milling effect on the dry feathers, with the most delicate parts of the feather being broken down first. This differential milling effect means that the relatively fragile vanes will become powdered but the tough feather quills will not be broken down by the milling process.

Accordingly, the process of the first aspect of the present invention does not make use of mills that crush or chop or cut (e.g. a cutting mill or a disk mill). A mill having a grinding action is essential. Furthermore, the use of dry feathers in the milling is essential. Such a grinding action can suitably be achieved by use of a curved surface interacting with the whole dry feathers. For example, it may be achieved by a ball mill (which may be a common ball mill or may be a planetary ball mill) or it may be achieved by a roller mill or a rod mill.

Therefore the milling process breaks down the dry feather barb material into a powder. The particle size for the feather barb material is determined by the length of time for which milling is carried out. The longer the milling time, the smaller the particle size that is obtained.

During the milling process some milled powder may be removed from the mill, either batch-wise or continuously. This can help to avoid a cushioning effect of the balls and the milling process can progress more efficiently.

No chemical pre-treatment of the feathers is required. They may be disinfected, e.g. during the washing step, but this is not classed as a chemical treatment.

The milling may be carried out as a dry milling process at atmospheric temperature and pressure. The milling atmosphere may suitably be air.

The process of the first aspect of the present invention results in powdered feather barb material being obtained.

It has been determined by the inventors that the powdered feather barb material should have a particle size distribution such that its particles are all sized within the range of from 50 to 850 µm, e.g. from 50 to 800 µm. These particle sizes give rise to excellent handling and processability as well as characteristics that make them good fillers, insulating materials, packaging materials and/or water-repellent materials.

If any particles below 50 µm in diameter are present, then desired characteristics such as tensile strength can be impaired. If particles above 850 µm, e.g. above 800 µm, are present then the product is difficult to process or may lead to end products with undesirable aesthetics, e.g. lumpiness.

Sieving can be used to assess the particle size range for the powdered material; in this regard sieves with different mesh size can be utilised and it can be seen at what mesh size all the particles go through the sieve and at what mesh size none of the particles go through the sieve. Likewise an air-classification system, operating with air jets can be utilised to classify particle sizes in an efficient manner.

In one embodiment, the powdered feather barb material has a particle size distribution such that its particles are all sized within the range of from 50 to 500 µm, e.g. from 50 to 400 µm or from50 to 300 µm, such as from 80 to 300 µm or from 100 to 300 µm or from 100 to 250 µm or from 100 to 200 µm.

In one embodiment the powdered feather barb material has a tapped bulk density from 31 to 45kg/m³. As the skilled person will appreciate, the tapped density is determined by mechanically tapping a measuring cylinder (i.e. raising the cylinder and allowing it to drop a specified distance under its own weight) containing the sample under test, and by dividing the sample weight by the final tapped volume.

Tapped density can be measured at room temperature using a Copley Jv2000 Tapped Density machine.

In one embodiment the powdered feather barb material has an excellent ability to absorb moisture. The natural moisture content in atmospheric air is 8-11%. In humid environments, (from 60 to 85% relative humidity) the powdered feather barb material is capable of absorbing 12 to 55% moisture by weight. Whole feathers, in contrast, can uptake a maximum 12% of moisture, as the closed cell-structure prevents moisture penetration. The humidity of the environment and the moisture absorbed from the environment can be measured using a thermo-hygrometer, such as the OMEGA^{®} RH80.

In one embodiment the powdered feather barb material is thermally stable up to 160 degree Celsius. The temperature up to which material is thermally stable can be measured using a thermogravimetric analyser, such as the Discovery TGA 55 from TA Instruments.

In one embodiment the powdered feather barb material is white, off-white or beige in colour.

As the skilled person will be aware, milling is a unit operation where mechanical energy is applied to physically break down material into particles or to break coarse particles into finer ones. The terms milling, size reduction, comminution, and pulverization may be used interchangeably.

In one preferred embodiment of the process of the first aspect, the milling is carried out by dry ball milling, e.g. using ceramic balls or aluminium balls or steel balls. However, any suitable milling media may be selected.

The tumbling effect of the ball mills on the dry feathers means that the milling process has a gradual milling effect, with the most delicate parts of the feather being broken down first. This differential milling effect means that the relatively fragile vanes will become powdered but the tough feather quills will not be broken down by the milling process.

The ball mill may be lined with any suitable lining. In one embodiment it may be a ceramic lined ball mill or an aluminium lined ball mill or a rubber lined ball mill.

Preferably, the ball mill should be operated such that the balls are tumbling to separate the dry feather barb material into pieces, which are then further broken down until the desired size reduction is achieved.

This is related to the speed at which the mill is rotated. However, it will be appreciated by the skilled person that an appropriate rate of ball mill rotation, i.e. the revolutions per minute used in milling, is not an absolute value but rather is a function of the size of the mill used.

Therefore, for example, a suitable mill speed for a laboratory ball mill might be in the range of from 30 to 70rpm, e.g. from 40 to 60rpm, whereas a suitable mill speed for an industrial ball mill might be in the range of from 10 to 50rpm, e.g. from 15 to 50rpm or from 20 to 50rpm, such as from 20 to 40rpm or from 20 to 30rpm.

A laboratory ball mill might have a capacity of up to 20 litres, e.g. from 1 to 20 litres, such as from 5 to 15 litres, whereas an industrial ball mill might have a capacity of 100 litres or more, e.g. from 100 to 20,000 litres, such as 200 to 10,000 litres or from 500 to 5,000 litres.

To ensure that the balls are tumbling to gently separate the feather barb material into pieces, the ball mill should not be filled to its maximum capacity. In this regard, having enough space in the milling container (i.e. the vessel within which the ball milling occurs) ensures that the milling process has a gradual milling effect, with the most delicate parts of the feather being broken down first.

In this regard, the volume taken up by the feathers plus the milling media (the mill balls) is considered. For example, the milling container might be filled with a quantity of feathers plus milling media that is 50% or less of the milling container by volume, such as 40% or less or 30% or less. In one embodiment, the milling container is filled with a quantity of feathers plus milling media that is 25% or less of the milling container by volume, such as 20% or less or 15% or less. It may be that the milling container is filled with a quantity of feathers plus milling media that is from 1 to 40% of the milling container by volume, such as from 5 to 30%, or from 10 to 25%.

In one embodiment milling may be carried out for an hour or more, such as two hours or more or three hours or more, or four hours or more. In one embodiment milling may be carried out for five hours or more, such as six hours or more or seven hours or more, or eight hours or more. In one embodiment the milling is carried out for from 3 to 48 hours, such as from 4 to 36 hours or from 5 to 24 hours or from 6 to 18 hours.

The skilled person will appreciate that feathers from different species will vary in how easy they are to grind, with some feathers being bigger and tougher than others. Therefore a longer milling time will be required for turkey feathers as compared to chicken feathers, and yet shorter times will be appropriate for smaller softer feathers such as duck or goose feathers.

In step e) of the process of the first aspect the powdered feather barb material as obtained from step d) is separated from the feather quills. This may be carried out by a mechanical separation technique.

In one embodiment this may be carried out by sieving or screening or air-classification.

As noted above, the powdered feather barb material may be used in a process for obtaining biodegradable filler. This process comprises:
- carrying out the process of the first aspect, wherein in step d) the milling is carried out so as to obtain powdered feather barb material that has a particle size distribution such that its particles are all sized within the range of from 50 to 300 µm, such as from 50 to 200 µm.

In one embodiment, the powdered feather barb material is then combined with a resin and/or binder in powder or liquid form.

The resin may be a synthetic or natural resin. The resin may be, but is not limited to, a polyolefin resin, polyvinyl ester resin (including polyvinyl chloride resin, polyvinyl acetate resin, polyvinyl chloride acetate resin and polyvinyl butyral resin), ABS resin, polystyrene resin, methacrylic resin, polycarbonate resin, polyethylene terephthalate resin, polyamide resin, alkyd resin, acrylic resin, polyurethane resin, polyester resin, melamine resin, fluoropolymer, or epoxy resin. Cellulose derivatives may be contemplated, such as cellulose esters (nitrocellulose, cellulose acetate and the like), and especially cellulose ethers, for example, methylcellulose, hydroxyethylcellulose, hydroxypropylcellulose, propionitrile cellulose, ethyl cellulose and benzylcellulose. The corresponding derivatives of other polysaccharides can also be used.

The binder may be a polymeric binder, for example, an acrylic polymer or copolymer binder. The binder may be a metal silicate binder, for example an aluminosilicate binder.

As noted above, the powdered feather barb material may also be used in a process for obtaining an insulation material. This process comprises:
- carrying out the process of the first aspect wherein in step d) the milling is carried out so as to obtain powdered feather barb material that has a particle size distribution such that its particles are all sized within the range of from 600 to 850 µm, e.g. from 600 to 800 µm, such as from 700 to 850 µm, e.g. from 700 to 800 µm.

In one embodiment, the powdered feather barb material is then combined with a polymer.

The polymer may be an expanded or foamed polymer or may be a powdered polymer. In one embodiment the polymer is a bio polymer, e.g. poly lactic acid.

As noted above, the powdered feather barb material may also be used in a process for obtaining a packaging material. This process comprises:
- carrying out the process of the first aspect wherein in step d) the milling is carried out so as to obtain powdered feather barb material that has a particle size distribution such that its particles are all sized within the range of from 600 to 850 µm, e.g. from 600 to 800 µm, such as from 700 to 850 µm, e.g. from 700 to 800 µm.

In one embodiment, the powdered feather barb material is then combined with a polymer and formed into a packaging article.

The polymer may be an expandable or foamable polymer or may be a powdered polymer. In one embodiment the polymer is blended with the powdered feather barb material before the polymer is then foamed. In one embodiment the polymer is polystyrene and this is blended with the powdered feather barb material before the polystyrene is then foamed.

In one embodiment the foamed blend of polymer plus powdered feather barb material is extruded or moulded into the form of a packaging article.

In one embodiment the packaging article is a protective block or pad or cornerpiece, packaging beads, a box, or a lid.

As noted above, the powdered feather barb material may also be used in a process for obtaining a water-repellent material. This process comprises:
- carrying out the process of the first aspect wherein in step d) the milling is carried out so as to obtain powdered feather barb material that has a particle size distribution such that its particles are all sized within the range of from 50 to 300 µm, such as from 50 to 200 µm.

In one embodiment, the powdered feather barb material is combined with a building material, such as concrete, polymer, or fibreboard, e.g. MDF, to create a hydrophobic material.

In one embodiment, the powdered feather barb material is combined with paint, or is added during the production of paint, to create a hydrophobic paint.

### Seventh to Eleventh Aspects

In the process of the invention for obtaining fibrillated fibres comprising keratin, as defined in claim 1 option (i), whole feathers are provided in a non-chemically treated form. Preferably the feathers as provided in step a) are a by-product from a poultry-processing plant. The term "poultry" is intended to refer to any kind of domesticated bird, captive-raised for its utility, and includes but is not limited to, chickens, turkeys, geese and ducks.

In the embodiment where the feathers that are used are a by-product from a poultry-processing plant, the feathers are collected while still fresh (less than 24-hours after being plucked from the bird, e.g. less than 12-hours after being plucked). These are either used directly in the present process or alternatively are rinsed with water, and then stored in a cool environment (e.g. from 5 to 20 degrees C) which is preferably not in direct sunlight before being used in the present process.

It is important in the present invention that the feathers as used in a non-chemically treated form. Therefore they have been plucked from the bird and either are used directly or alternatively the only processing of the feathers after plucking is one or more of rinsing, drying and storing.

In the present invention it is intended that the feathers as provided in step a) are whole, i.e. they include the two vanes attached on either side of the quill. In addition, it is intended that the feathers remain in whole form during steps b) and c). It is intended that the feathers should be whole, with two vanes still being attached on either side of the quill, at the point when they are milled in step d).

In one embodiment of the process of the seventh aspect steps a) to d) are carried out at the poultry-processing plant. In another embodiment steps a) to c) are carried out at the poultry-processing plant and the dried feathers as obtained from step c) are then transported from the poultry-processing plant to a separate treatment location before carrying out step d). In another embodiment feathers are transported from a poultry-processing plant to a separate treatment location before carrying out steps a) to d) of the process of the present invention.

Any one or more of the steps of the process of the seventh aspect may be carried out batch-wise or continuously. In particular, the milling step d) may be carried out as a batch process or may be run as a continuous process.

Feathers from any avian species may be used, but examples are feathers from chickens, turkeys, quails, ducks, geese, pigeons, doves, pheasants, emus, swans, and ostriches. In one embodiment, the feathers are from chickens or ducks or geese or turkeys.

The term "feather" includes, but is not limited to, primary feathers, secondary feathers, tail feathers, contour feathers, down feathers, filoplumes, semiplume feathers, and bristle feathers.

In step b) the feathers as obtained from step a) are washed with an aqueous liquid at elevated temperature. In one embodiment the elevated temperature is 30 degrees C or more, such as 40 degrees C or more or 50 degrees C or more. In one embodiment the elevated temperature is 60 degrees C or more, such as 70 degrees C or more or 80 degrees C or more. It may be that the elevated temperature is from 50 to 150 degrees C, such as from 60 to 130 degrees C or from 70 to 120 degrees C. In one embodiment the elevated temperature is from 70 to 110 degrees C, such as from 75 to 100 degrees C or from 80 to 100 degrees C.

The aqueous liquid may comprise water and surfactant, for example it may comprise 90wt% or more water and from 0.1 to 10wt% surfactant. In one embodiment it comprises 95wt% or more water and from 0.5 to 5wt% surfactant, e.g. 97wt% or more water and from 0.5 to 3wt% surfactant.

The surfactant may be anionic or cationic or non-ionic. The surfactant may, for example, be an anionic surfactant such as an alkylbenzenesulfonate, for example a C8-C24 alkylbenzenesulfonate, especially a C8-C18 alkylbenzenesulfonate, in particular a C10, 11 or 12 alkylbenzenesulfonate. In one embodiment it is a linear alkylbenzenesulfonate. The surfactant may alternatively be a non-ionic surfactant, such as a primary alcohol ethoxylate surfactant (e.g. a C8-C24 primary alcohol ethoxylate, especially a C8-C18 primary alcohol ethoxylate, such as a C10, 11 or 12 primary alcohol ethoxylate) or an alkylphenol ethoxylate surfactant (e.g. a C8-C24 alkylphenol ethoxylate, especially a C8-C18 alkylphenol ethoxylate, such as a C10, 11 or 12 alkylphenol ethoxylate). However, the present invention is not limited to a specific surfactant type and the skilled person will be aware of surfactants as used in domestic and industrial settings that can wash animal-derived materials such as wool and feathers.

The aqueous liquid may comprise a disinfecting agent. For example, the disinfecting agent may be hydrogen peroxide or derivatives thereof (such as sodium percarbonate).

The disinfecting agent may be used in the aqueous liquid at a level of from 0.01wt% to 5wt%, e.g. from 0.05wt% to 4wt%, such as from 0.1wt% to 3wt%.

The aqueous liquid may also comprise one or more enzymes, as is known in biological detergents. These may suitably be alkaline enzymes. For example, the enzymes may be one or more of α-amylase, cellulase, protease, lipase and mannase. Enzymes that are suitable for use in this regard are described in Methods in Biotechnology, Vol. 17: Microbial Enzymes and Biotransformations, 2005, pp 151-161.

The enzymes may be used in the aqueous liquid at a level of from 0.0001wt% to 0.5wt%, e.g. from 0.0005wt% to 0.1wt%, such as from 0.001wt% to 0.02wt%.

Optionally one or more flame-retardant agent may be added to the feathers before or after milling. In one embodiment this is added during step b). This may be added through bath impregnation or spray impregnation.

The flame-retardant agent may be selected from additives such as potassium hexafluorozirconate, organic phosphorus nitrogen compounds, organic phosphorus compounds, sodium salts of tetrabromophthalic acids, and combinations thereof.

Optionally one or more moth-proofing agent may be added to the feathers before or after milling. In one embodiment this is added during step b). This may be added through bath impregnation or spray impregnation.

The moth-proofing agent may be selected from insecticides such as synthetic pyrethroids (e.g. empenthrin, salifluofen, acrinathrin, transfluthrin, d-phenothrin or metofluthrin).

Optionally one or more deodorant agent may be added to the feathers before or after milling. In one embodiment this is added during step b). This may be added through bath impregnation or spray impregnation.

The washing step may be carried out for 30 minutes or more, such as an hour or more or 90 minutes or more. In one embodiment the washing step is carried out for from 1 to 5 hours, such as from 1 to 3 hours.

In step c) the washed feathers as obtained from step b) are dried. This may involve heating to a temperature of 50 degrees C or more, such as 60 degrees C or more or 70 degrees C or more. It may be that the heating is from 50 to 150 degrees C, such as from 60 to 130 degrees C or from 70 to 120 degrees C. In one embodiment the heating is from 70 to 110 degrees C, such as from 75 to 100 degrees C or from 80 to 100 degrees C.

The heating may be carried out in an oven or other suitable equipment. In one embodiment, step c) is carried out at the poultry-processing plant and the heating is carried out using waste heat from the poultry-processing plant.

The heating may be carried out for an hour or more, such as two hours or more or three hours or more, or four hours or more. In one embodiment the heating is carried out for from 2 to 48 hours, such as from 4 to 40 hours or from 8 to 36 hours or from 10 to 30 hours.

It may be that the feathers undergo spin drying before heating, in order to remove excess moisture. For example, the feathers may be spin dried for 2 minutes or more, such as 3 minutes or more or 4 minutes or more or 5 minutes or more. In one embodiment the feathers may be spin dried for from 2 minutes to 1 hour, such as from 5 minutes to 30 minutes.

The spinning may be at any suitable speed, e.g. from 500 to 1500rpm, such as from 700 to 1400rpm or from 800 to 1300rpm or from 900 to 1200rpm.

Preferably in step c) 90wt% or more of the aqueous liquid from washing is removed from the feathers, such as 95wt% or more or 98wt% or more or 99wt% or more or 99.5wt% or more.

In one embodiment, the feathers are weighed before step b) and are weighed again after step c), to ensure that most or all of the moisture from the washing step has been removed.

In step d) of the process of the seventh aspect a dry milling process is used to generate a fibre blend from the feathers. In this regard, a hammer mill is used.

As discussed above, the use of a hammer mill with specific process parameters results in a fibrillated fibre blend comprising both fibrillated feather barb material and fibrillated feather quills.

Accordingly, the process of the seventh aspect of the present invention does not make use of mills that crush or chop or cut (e.g. a cutting mill or a disk mill). A mill having a beating or impacting action is essential. Furthermore, the use of dry feathers in the milling is essential.

The process of the seventh aspect of the invention makes use of a hammer mill. As the skilled person will appreciate, a hammer mill comprises a casing having an inlet end, a discharge end, a longitudinal axis passing between the inlet and discharge ends, and a sidewall substantially encapsulating the axis between the inlet and discharge ends, such that an enclosed grinding space is defined within the casing. A rotor assembly is provided for rotation about the axis, and includes a rotatable shaft on the axis, support means extending radially from the shaft for co-rotation therewith, and hammer elements attached to the support means, the hammer elements each having a radially outer tip which defines a hammer rotation diameter. At least one grinding plate at the inside of the sidewall defines a grinding surface in the grinding space having a radius of curvature centred on the axis, a length dimension parallel to the axis, and a width dimension defined by an arc about the axis. Each hammer tip passes along the width dimension of the grinding plate with a clearance from the grinding surface, which defines a grinding gap. The grinding gap is adjustable, e.g., by movement of the grinding plates towards and away from the axis. In use, the material is impacted by the rotating hammers and the hammers force the material against a screen. The screen has apertures through which the material passes once it has been ground to a small enough size.

Thus the hammer mill as used in the process of the seventh aspect of the present invention is of a conventional type, but the grinding gap and the apertures for the screen (size and shape) have been selected to achieve the desired characteristics in the end product. It has been determined that by the selection of these parameters a fibrillated fibre blend is obtained comprising both fibrillated feather barb material and fibrillated feather quills.

The screen may have a curved profile, e.g. to match the profile of the casing/ grinding surface.

The screen may be provided with an array or grid of apertures; thus there may be multiple rows of apertures. The apertures may be provided in a spaced array extending down most or all of the length of the screen and extending across most or all of the width of the screen. In one embodiment the apertures are provided in a regularly spaced array.

In one embodiment the screen has 20 or more apertures, such as 25 or more, or 30 or more, or 40 or more, or even 50 or more, e.g. 60 or more, or 70 or more apertures. These may be regularly spaced across the screen.

In one embodiment, the apertures are provided at a frequency across the surface area of the screen such that per 10cm x 10cm area of the screen, there are 20 or more apertures, such as 25 or more, or 30 or more, or 35 or more apertures.

For example, it may be that for a screen with apertures having a 10mm diameter, per 10cm x 10cm area of the screen, there are 35 or more apertures, such as from 36 to 50 apertures.

For example, it may be that for a screen with apertures having an 8mm diameter, per 10cm x 10cm area of the screen, there are 50 or more apertures, such as from 60 to 70 apertures.

For example, it may be that for a screen with apertures having a 5mm diameter, per 10cm x 10cm area of the screen, there are 90 or more apertures, such as from 100 to 100 apertures.

In one embodiment the distance between adjacent apertures is no more than twice the diameter of the aperture, such as no more than 1.5 times the diameter of the aperture. In one embodiment the distance between adjacent apertures is less than or equal to the diameter of the aperture. In one embodiment the distance between adjacent apertures is 10mm or less, e.g. from 5mm to 10mm.

The screen may have a thickness of 1mm or more, such as 2mm or more, e.g. from 1mm to 15mm and especially from 2mm to 10mm. Within these ranges, thicker screens will be used for heavy duty industrial machines whilst thinner screens can be utilised for small hammer mills.

A further benefit of the present invention is that no chemical pre-treatment of the feathers is required. They may be disinfected, e.g. during the washing step, but this is not classed as a chemical treatment.

The milling may be carried out as a dry milling process at atmospheric temperature and pressure. The milling atmosphere may suitably be air.

The hammer mill uses a plurality of rotating hammers to force the feathers against a curved grinding surface having raised teeth. A conventional hammer mill may be used. This may, for example, have three or more rotating hammers, such as four or more, or five or more, or six or more. The curved grinding surface may be the inside surface of a barrel shaped chamber. The teeth may be provided over some, most or all of the surface; in some embodiments there may be part of the surface that is not provided with teeth. In the locations where teeth are provided, the teeth may be provided at regular intervals, i.e. they may be regularly spaced apart. In one embodiment the curved grinding surface is provided with ten or more, or twenty or more, raised teeth, such as thirty or more, or forty or more.

The minimum clearance as a hammer tip passes over the grinding surface defines a grinding gap. This grinding gap is known in the art of hammer mills. In the present invention it is important that this grinding gap is from 1mm to 6mm, such as from 2mm to 6mm. In one embodiment it is from 1mm to 5mm, such as from 2mm to 5mm. In one embodiment it is from 1mm to 4mm, such as from 2mm to 4mm. Particularly beneficial results can be obtained when the grinding gap is 5mm or less, and especially 4mm or less.

The ground feather material is forced out of the mill through screen perforations (apertures) by the action of the rotating hammers. This use of screen perforations is known in the art of hammer mills. In the present invention it is important that the screen perforations are substantially circular with a diameter of from 3mm to 10mm. As explained in the examples, if the aperture size is too large then the desired fibrillation and crimping of the feather fibre does not occur. In one embodiment the screen perforations have a diameter of from 3mm to 9mm, such as from 3mm to 8mm or from 4mm to 8mm, e.g. from 5mm to 8mm.

It will be appreciated that a hammer mill can be run continuously because the fibres exit the mill via the screen once they have been milled sufficiently to exit the apertures.

In one embodiment the hammer mill is run to result in an output of fibrillated fibres of 10kg per hour or more, such as 25kg per hour or more, or 30kg per hour or more, or 50kg per hour or more, or 75kg per hour or more; e.g. from 80 to 300kg per hour or from 100 to 200 kg per hour.

The hammer mill may be operated at any suitable speed. The best results in terms of the fibre blend being optimal for use in an air-laid product have been obtained when the hammers are rotated at a speed of from 200 to 3000rpm, e.g. from 500 to 3000rpm and especially from 1000 to 3000 rpm, e.g. from 1000 to 2000rpm. These rotation speeds allow for fibrillation of the fibres to occur whilst avoiding thermal degradation.

The process of the seventh aspect of the present invention results in a fibrillated fibre blend, comprising both fibrillated feather barb material and fibrillated feather quills, being obtained.

The fibrillated fibre blend comprising both fibrillated feather barb material and fibrillated feather quills as obtained by the process of the seventh aspect of the invention may have fibres with a length of from 1mm to 2cm, e.g. from 1mm to 1cm, such as from 5mm to 1cm.

This can be determined by sieving or by air classification.

The fibrillated fibre blend comprising both fibrillated feather barb material and fibrillated feather quills as obtained by the invention may have fibres with a diameter of from 1 µm to 200 µm, e.g. from 1 µm to 100 µm, such as from 10 µm to 100 µm.

In one embodiment the fibrillated fibre blend has a tapped bulk density from 15 to 30 kg/m³. As the skilled person will appreciate, the tapped density is determined by mechanically tapping a measuring cylinder (i.e. raising the cylinder and allowing it to drop a specified distance under its own weight) containing the sample under test, and by dividing the sample weight by the final tapped volume.

Tapped density can be measured at room temperature using a Copley Jv2000 Tapped Density machine.

In one embodiment the fibrillated fibre blend has an excellent ability to absorb moisture. The natural moisture content in atmospheric air is 8-11%. In humid environments, (from 60 to 85% relative humidity) the powdered feather barb material is capable of absorbing 10 to 45% moisture by weight. Whole feathers, in contrast, can uptake a maximum 12% of moisture, as the closed cell-structure prevents moisture penetration. The humidity of the environment and the moisture absorbed from the environment can be measured using a thermo-hygrometer, such as the OMEGA^{®} RH80.

In one embodiment the fibrillated fibre blend is thermally stable up to 160 degree Celsius. The temperature up to which material is thermally stable can be measured using a thermogravimetric analyser, such as the Discovery TGA 55 from TA Instruments.

In one embodiment the fibrillated fibre blend is white, off-white or beige in colour. However, depending on the breed of bird from which the feathers are obtained, the blend may be brown or black in colour.

In one embodiment the fibres in the fibrillated fibre blend have a Young's Modulus strength from 2.5 to 4GPa and a tensile strength from 41 to 130MPa. These values can be measured according to the "ISO 14577 Test Method". The measurements may be obtained using a universal testing machine that employs a nanomechanical actuating transducer head to produce tensile force using electromagnetic actuation combined with a capacitive gauge, such as the Agilent T150 UTM.

In one embodiment the fibrillated fibre blend exhibits a temporary hydrophobic behaviour in water. This is consistent with the fact that keratin contains hydrophobic and hydrophilic groups. Hydrophobic behaviour can be assessed using a contact angle measurement goniometer, such as the ramé-hart Model 590.

In one embodiment the fibrillated fibre blend comprises fibres having a shape which is a crimped rectangular fibre, having branched barbules and hooklets spreading from the barb. This can be seen by using SEM and by using stereomicroscopy, such as by use of the Phenom SEM Pro and the Leica M205 C microscope.

The fibrillated fibre blend is useful as, for example, a biodegradable filler, an insulation additive, a packaging material; or a flame retardant material.

It is, in particular, useful as the fibrous material in an air-laid product.

The fibrillated fibre blend can be used to form a composite material together with a binder, e.g. a polymeric binder. Thus there is a process provided for obtaining a composite product, comprising:
i) providing a fibrillated fibre blend according to the eighth aspect;
ii) combining the fibrillated fibre blend with a binder to form a composite material; and
iii) processing the composite material to form a composite product.

In one embodiment the binder is a thermoplastic binder. The binder may, for example, be provided in the form of a liquid or in the form of a polymeric fibre, e.g. a bi-component fibre. The binder may be used in an amount of from 1 to 75wt% of the composite material, e.g. from 2 to 70wt%, such as from 3 to 60wt% or from 5 to 50wt%.

In one embodiment step iii) comprises thermally and/or chemically processing the composite material to form a composite product. In one embodiment there is thermal processing, e.g. by passing the material through an oven. In one embodiment the thermal processing involves temperatures in the range of from 80 to 300 degrees C, e.g. from 90 to 250 degrees C, or from 100 to 200 degrees C, or from 100 to 180 degrees C, such as from about 130 to 170 degrees C.

In one embodiment the process comprises moulding or forming the composite material or the composite product into a shaped article. This may be before step iii), or it may be step iii), or may be part of step iii), or may be subsequent to step iii). It may be that the fibrillated fibre blend is combined with the binder in a mould. It may be that the composite material is pressed or otherwise formed into a shape prior to thermally and/or chemically processing the composite material.

The shaped article may be a 3D composite product. Fibre-polymer composite materials are well known in the art and have a range of uses in consumer goods and industrial products. The shaped article may in one embodiment be in the form of a board or rollable sheet or mat or batt, but may be provided in any other three dimensional shape.

In one embodiment the composite material or the composite product is provided into one or more moulds, e.g. steel moulds, to form the material or product into the shape of an article. The shaped article may be formed by compression moulding.

In one embodiment the method comprises thermal processing of the composite material. In this embodiment, after the thermal processing and any required moulding or forming the composite product may then be allowed to cool, e.g. to room temperature.

In one embodiment the process includes a step of pressing or surface sealing to provide a desired finish for the product.

In one embodiment the process is an air-laid manufacturing process.

Thus the fibre blend may be formed into a web, the thermoplastic binder may be applied to the web, e.g. as a coating, to form a composite material, and a thermal treatment, e.g. with hot air, may be applied to bind the fibres together.

The fibre blend may be formed into a web by air carding. This may utilise carding brushes in combination with air jets. This may be carried out using an air forming head of the type described in EP2238281.

In one embodiment the fibres of the air-laid fibrous web may be bonded by passage through an oven set to a temperature high enough to fuse the binder. The oven may be a conventional through-air oven or may be operated as a convection oven, but may also achieve the necessary heating by infrared or even microwave irradiation. In one embodiment a double belt oven system is used.

In one embodiment the fibre blend or the composite material is blown into moulds, e.g. steel moulds, for compression moulding.

In one embodiment the composite material is pressed or otherwise formed into a desired shape, e.g. by deposition of the material on a vacuum belt and compaction of the composite material.

If the polymeric binder is in liquid form a spray impregnation process is desired for the air-laid production. Thus the thermoplastic binder may be sprayed onto the web, e.g. as a coating, to form a composite material. Examples of such binders include polyurethane-based adhesives, thermoplastic starch adhesive, polyvinyl alcohols, polyvinyl acetates or urea-formaldehyde based resins, copolymers thereof, and blends thereof.

If the polymeric binder is in a fibrous form, e.g. a bi-component-fibre, then this may be formed into a web with the fibrillated feather fibres by air carding. This may utilise carding brushes in combination with air jets.

Bi-component fibres comprise two different polymers in a single fibre. Bi-component fibres can be provided in a number of forms, depending on the respective locations of the two components in the fibre. These include: side-by-side, sheath-core, segmented pie, islands in the sea, tipped, or segmented ribbon.

A sheath-core form can be useful as it provides a first polymer in the core of the fibre which is then circumferentially surrounded by the second polymer.

In one embodiment the bi-component fibre may comprise a PE (polyethylene) or modified PE sheath. In one embodiment the bi-component fibre may comprise a PE (polyethylene) or modified PE sheath which may have a PET (polyethylene terephthalate) or PP (polypropylene) core. In one embodiment, the bi-component fibre may have a core made of polyester and sheath made of polyethylene. Alternatively, a multi-component fibre with a PP (polypropylene) or modified PP or PE sheath or a combination of PP and modified PE as the sheath, or a copolyester sheath wherein the copolyester is isophthalic acid modified PET (polyethylene terephthalate) with a PET or PP core, or a PP sheath-PET core and PE sheath-PP core and co-PET sheath fibres may be employed.

In one embodiment the bi-component fibre may comprise a sheath polymer that has a melting point of 170 degrees C or less, such as 160 degrees C or less, or 150 degrees C or less, or 140 degrees C or less, e.g. the polymer used as the sheath may have a melting point of from 90 to 150 degrees C or from 100 to 140 degrees C.

In one embodiment the bi-component fibre may have a denier of from 0.5 to 18, e.g. from 1 to 10. The fibre may comprise polyethylene/polypropylene; polyethylene/polyester (especially polyethylene terephthalate); polypropylene/polyester; copolyester/polyethylene terephthalate, such as polyethylene terephthalate-isophthalate/polyethylene terephthalate; nylon 6/nylon 6,6; or nylon 6/polyethylene terephthalate.

In one embodiment the bi-component fibre comprises one or more, e.g. two, polyolefin polymers, such as C2-C4 polyolefin polymers.

The bi-component fibre may, in one embodiment, be in sheath-core form and consist of a core fibre of a first polymer and an outer layer of a second polymer, wherein the first polymer has a higher melting point than the second polymer. Utilising this kind of fibre is technically beneficial. The fibrillated feather fibres can then bond with the low melting point polymer (e.g. polyethylene) on the outside of the fibre at low temperatures, therefore avoiding thermal degradation. Meanwhile, the resultant composite product has good strength and insulation properties.

As examples of melting points, PP= 165°C, PE= 120-130 °C, PA (polyamide) = 220°C, PET= 260°C, co-PET = 115°C.

In one embodiment the first polymer (core) may be polypropylene and the second polymer (sheath) may be polyethylene.

By combining the fibrillated feather fibres with the bi-component fibres a robust structural body can be created as a non-woven product.

The bi-component fibre binder may suitably be used such that it is present in the composite product in an amount of from 2 to 70wt% of the composite material.

The densities of a composite product produced according to the invention as an air-laid non-woven material can be in the range from 15kg/m³ to 200kg/m³ or higher.

The fibrillated fibres of the invention can therefore form a non-woven product with a density of 40-50kg/m³. As discussed above, this is a density that is particularly desirable in terms of thermal performance.

The composite products produced according to the invention as an air-laid non-woven material have been found to exhibit excellent thermal conductivity, e.g. in the range of 0.028 to 0.031 WmK, when measured with a hot disk thermal conductivity sensor.

The air-laid composite product as produced according to the invention may, in one embodiment, be manufactured as a rollable sheet, a mat, a batt, or as a board material.

Thicknesses for the composite product are not specifically limited but may, for example, be in the range of from 0.1 to 50cm, such as from 0.3 to 30cm, e.g. from 0.5 to 20cm.

Potential uses for composite products, especially air-laid products, according to the invention, include but are not limited to:
Medical applications: e.g. waterproof underpads, bed pads, sheet protectors, hospital mattresses.

Household applications: e.g. kitchen and fan filters, wipes, mops, carpet underlay, insulation for residential buildings.

Clothing and accessories and sporting goods: e.g. luggage lining/components, handbag lining/components, clothing insulation/protection, shoe components, disposable clothing components, surfboards.

Furniture, textile and bedding applications: e.g.: insulators to furniture body parts, quilt backing, edge trim materials, cushioning, mattresses and mattress pad components, sleeping bag lining, chair headrests (including airline headrests), filling/padding for quilts, blankets and upholstered furniture.

Automotive applications: e.g. boot liners, parcel shelves, shelf trim, mounded bonnet liners, boot floor covering, headliners, rear parcel shelves, cabin air filters, insulation materials, under padding, door trim.

Building and construction applications: e.g. thermal and noise insulation, pipe wrap, panelling.

Geotextile applications: e.g. soil stabilisation, drainage, sedimentation and erosion control, pond liners, impregnating base, drainage channel liners.

Industrial applications: e.g. filters, cable insulation, reinforced plastics, noise absorbent layers, insulation for commercial buildings.

Agriculture applications: e.g. weed control fabrics, biodegradable plant pots, capillary matting.

Packaging applications: e.g. thermal insulation for food or pharmaceuticals, physical protection for shipped goods, such as for use in packaging goods for transport by mail or by vehicle transit (by road, rail, sea or air).

The invention will now be described, in a non-limiting fashion, with reference to the following examples:

### Examples

### Obtaining feathers

Feathers, e.g. chicken feathers, are taken from a slaughterhouse waste disposal line, where the feathers have been compacted. These are used whole whilst still fresh (less than 24 hours since being plucked).

### Washing feathers

The feathers are washed in a cylindrical washing machine containing water with 1% biological detergent at 90 degrees Celsius for 2 hours.

### Drying feathers

The washed feathers are spun in the same washing machine on a spin cycle, for 8 minutes at 1200rpm, to remove excessive moisture.

The feathers are then dried at 80 degrees Celsius for 24 hours in an oven to remove all moisture content.

### Milling process

### (a) Laboratory mill - feather powder production

50g of the dry feathers are placed into a laboratory ball mill, which has a 10 litre volume milling container. Milling is carried out using approximately 3kg of 1cm diameter ceramic milling balls.

The mill is rotated at 50 rpm for 6 hours to obtain a coarse powder (maximum size of particles: 850 µm, e.g. up to 800 µm) and for 16 hours to obtain a fine powder (maximum size of particles: 300 µm). Sieves are used to determine this sizing.

The tumbling action gently separates the feathers into smaller sections and leaves the quills intact.

The quills are separated out from the feather powder by use of a sieve.

### (b) Industrial mill v1 - feather powder production

130kg of the dry feathers are placed into an industrial ball mill, which is ceramic lined and driven by a 3kw motor. The external dimensions are 39x30 inches. Internally it is 35x26 inches. Alumina grinding balls with an average size of 20-30mm are used.

The milling container was approximately 25 to 30% full by volume when considering the total volume of the feathers plus the milling media.

The mill is rotated at 20 rpm for 9 hours to obtain a coarse powder (maximum size of particles: 800 µm) and for 18 hours to obtain a fine powder (maximum size of particles: 300 µm). Sieves are used to determine this sizing.

The tumbling action gently separates the feathers into smaller sections, and leaves the quills intact.

The quills are separated out from the feather powder by use of a sieve.

### (c) Industrial mill v2 - feather powder production

4kg of the dry feathers are placed into an industrial ball mill, which is ceramic lined and driven by a 1.1 kW Motor. The total capacity is 180 litres and is made by (Germany). The milling drum has internal dimensions approximately 600 mm long x 620 mm diameter. Motor through gearbox 1.1 kW, 220/380V, 910 rpm, 50 HZ. Alumina grinding balls with an average size of 20-30mm are used.

The milling container was approximately 25 to 30% full by volume when considering the total volume of the feathers plus the milling media.

The mill is rotated at 20 rpm for 3 hours to obtain a coarse powder (maximum size of particles: 850 µm) and for 6 hours to obtain a fine powder (maximum size of particles: 300 µm). Sieves are used to determine this sizing.

The tumbling action gently separates the feathers into smaller sections, and leaves the quills intact.

The quills are separated out from the feather powder by use of a sieve.

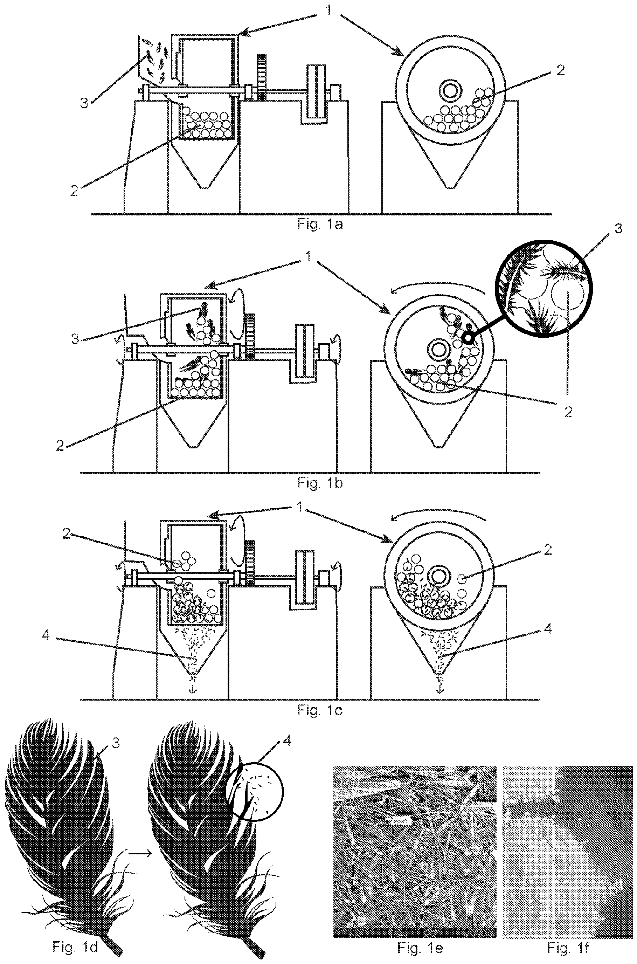

Figures 1a, 1b and 1c illustrate a ball mill 1 with grinding balls 2 and the stages in ball milling the feathers 3. **Figure 1a** shows a side view (left) and end view (right) of the ball mill before milling has started. **Figure 1b** shows a side view (left) and end view (right) of the ball mill as milling starts. **Figure 1c** shows a side view (left) and end view (right) of the ball mill as milling is completed and powdered feather 4 leaves the ball mill.

**Figure 1d** illustrates that the feather barb of the feather 3 becomes the powdered feather 4.

### (d) Hammer mill process - fibrillated feather fibre production

A Christy Turner X15 Crossbeater hammer mill, with a 55kW motor, was used. The mill contained two screens with curved/semi-circular profiles, each with rows of apertures that are 8mm diameter round holes. The apertures are provided as a regularly spaced array and per 10cm x 10cm surface area of the screen there are 60-70 apertures. The grinding gap is set to be 3-4mm.

The hammer mill can be run continuously. 2kg of the dry feathers are milled at a time in the milling chamber. The hammer mill is operated at 3000 rpm. This results in a 100-120kg output of fibrillated fibres per hour.

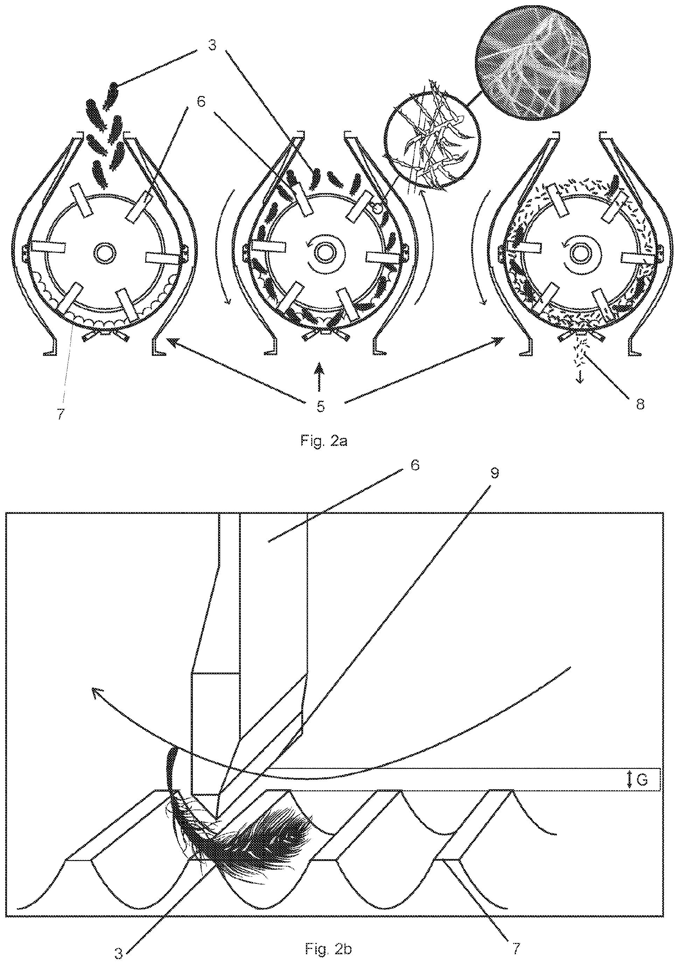

The fibrillated feather fibres are transported via airflow into a cyclone system and can be collected there. **Figure 2a** illustrates a hammer mill 5 with six rotating hammers 6 and a grinding surface with a plurality of raised teeth 7. The Figure shows the stages in ball milling the feathers 3. The left hand image shows an end view of the hammer mill before milling has started. The middle image shows an end view of the hammer mill as milling starts. The right hand image shows an end view of the hammer mill as milling is completed and fibrillated feather 8 leaves the hammer mill via the apertures in the screen (not shown). The insets on the middle image show the fibrillation starting to occur in the feathers, in both graphic form and an SEM image.

**Figure 2b** shows detail of the hammer mill, illustrating the hammer tip 9 and the grinding surface with raised teeth 7. The minimum clearance as the hammer tip 9 passes over the grinding surface defines a grinding gap G.

### Testing of parameters:

Screens with a range of different aperture sizes were tested. 2mm diameter round holes led to the mill becoming clogged. Good results were obtained for 4mm, 5mm, 6mm, 8mm and 10mm diameter round holes. 12mm diameter round holes resulted in milled fibres that were not noticeably fibrillated and crimped.

Holes that were square rather than round were not successful.

Using a grinding gap of less than 1mm or greater than 6mm was also not successful.

### Products

### a) Feather based powder

A photograph of the powder as obtained by the ball mill process above is shown in **Figure 1f****.**

The microstructure of the powder was looked at with a Phenom ProX scanning electron microscope. **Figure 1e** shows an SEM image of the powder.

### b) Feather-based filler material

The powder that has a particle size in the range of from 50 to 300 µm can be used as a filler, e.g. for plastics and composites.

The powder is non-reactive, non-toxic, and non-water soluble. It is stable but biodegradable. These characteristics make it suitable for use as a filler material.

Therefore powder that has a particle size in the range of from 50 to 300 µm may be combined with a resin or binder and used as a filler.

### Testing:

The feather powder was mixed at an addition level of from 5%-40% by weight with different thermoplastics: 1) poly lactic acid; 2) polycaprolactone; and 3) polypropylene.

The feather powder was mixed at an addition level in the range of from 5%-40% with different thermosetting plastics: 1) polyurethane resin and 2) epoxy resin. Likewise the mechanical properties were tested.

The polymer-powder mix can be extruded and pelletized. The pellets can be formed into shapes using moulds or injection moulding.

The polymer-powder mix can be poured into moulds and left to set. After a timeframe between about 0.5 to 8 hours the articles can be de-moulded.

In some embodiments the polymer-feather powder composites were significantly lighter than the respective polymer alone.

In some embodiments the polymer-feather powder composites acted as a reinforcement fibre inside the resin systems.

**Results:** A density measurement was conducted for a control (no feather powder) and for two composites. The polymer density of the control group was 2.25 g/cm³ and the density of the feather-polymer composites was 1.01g/cm³ and 1,073g/cm³.

### b) Feather-based flame-retardants

100g of Feather Powder, obtained from step d) is mixed with 100g 50% diluted organic phosphorus nitrogen compounds (salts) in liquid form. The feather powder is mixed under aggressive stirring until a brown dough type material presents itself. The mix is the placed for 24 hours in an oven and left to dry at 105 degree celcius. The resulting caked form of dried dough is then crushed in pestle and mortar. It can be readily utilised in adding to polymeric insulation products, which display a limited resistance to fire.

**Example protocol for integration of feather-based flame-retardants in PU-Insulation foams.** 2%wt feather flame retardant is added to Polyol and dispersed fully. Isocyanate is added in the required ratio to activate the Polyol. The mix is extruded and left for curing. The cured product displays a slight colour change.

### Testing:

The Boards are tested under the EN 13823 protocol. The untreated control group was evaluated in class E, whereas the samples with feather-based flame retardants reached class B.

### c) Feather-based insulation products

The powder that has a particle size in the range of from 600 to 850 µm, e.g. from 600 to 800 µm, such as from 700 to 850 µm, e.g. from 700 to 800 µm can be used as an insulation material.

The powder has a low density (e.g. about 1.1g/cm³), is sound absorbing and thermally insulating. These characteristics make it suitable for use as an insulation material.

### Example protocol for insulation material

Powder that has a particle size in the range of from 700 to 850 µm is weighed and mixed at a level of 5-50% by weight with a polymeric resin material. This may be a foamed polymer or powdered polymer, e.g. it may be a foamed or expanded material based on polyurethane or polyisocyanurate.

In other embodiments it may be poly-lactic acid or polystyrene, or it may be powdered poly-lactic acid (e.g. with an average particle size in the range of 50µm-500µm). In one embodiment the polymer selected is a biopolymer such as poly-lactic acid, cellulose propionate or cellulose acetate butyrate, leading to a "green" product.

The polymer-powder mix can then be placed in a mould and heated for 4-10 hours at a temperature of from 100 up to 200 degrees C. Pressure can be applied to compress the material. The composite material is then allowed to cool.

Alternatively, the polymer-powder mix can be extruded into a desired shape.

Notes: For two part resins, only one part of the resin is mixed with the feather powder, then afterwards Part B is added; otherwise the fibres are not distributed evenly. In order to achieve a better fibre distribution solvents, such as acetone, can be added at a level of from 1-6wt% to any part of the polymer system.

### Testing:

Feather powder that had a particle size in the range of from 700 to 850 µm was mixed with different polymer resins: 1) polyurethane foam and 2) polyisocyanurate foam, with the feather powder being added at a level of 5-35% by weight. The feather-foam blend was then extruded into boards.

The thermal conductivity of the resulting extruded material was assessed with hot disk thermal conductivity sensor equipment. Each material had a thermal conductivity in the range of 0.031-0.047 W/m K.

### d) Feather-based packaging products

The powder that has a particle size in the range of from 600 to 850 µm, e.g. from 600 to 800 µm, such as from 700 to 850 µm, e.g. from 700 to 800 µm, can be used as packaging material.

The powder has a low density (e.g. about 1.1g/cm³), and thermally insulating. These characteristics make it suitable for use as packaging material.

### Example protocol for packaging material:

Powder that has a particle size in the range of from 700 to 850 µm is weighed and mixed at a level of 5-50% by weight with a polymeric resin material. This may be a foamable polymer or powdered polymer, e.g. it may be a foamable or expandable material based on polyurethane or polyisocyanurate or poly-lactic acid or polystyrene, or it may be powdered poly-lactic acid (e.g. with an average particle size in the range of 50µm-500µm). In one embodiment the polymer selected is a biopolymer such as poly-lactic acid, cellulose propionate or cellulose acetate butyrate, leading to a "green" product.

When the polymer is foamable, e.g. polystyrene, the polymer-powder mix can be foamed and then extruded into a desired shape.

Alternatively, the polymer-powder mix can be extruded and pelletized. The pellets can be formed into shapes using moulds or injection moulding.

The resulting material is lightweight and therefore can be used as a packing material such as a protective block or pad or cornerpiece, packaging beads, a box, or a lid.

### e) Fibrillated fibres

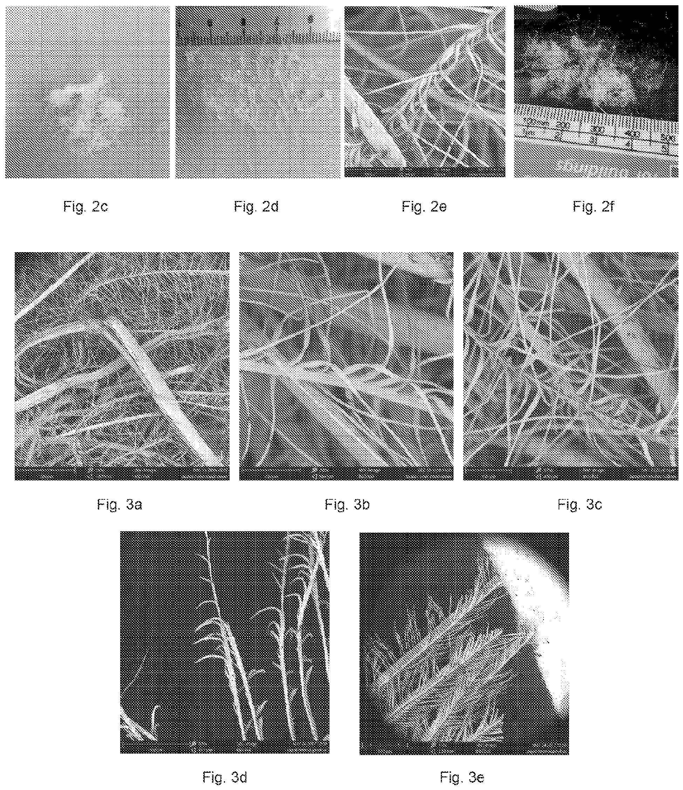

Photographs of fibre blends as obtained by the hammer mill process above are shown in **Figures 2c, 2d and 2f****.**

The microstructure of the feather fibres was looked at with a Phenom ProX scanning electron microscope. This allowed changes in structure as compared to a feather to be seen.

**Figure 2e** shows an SEM image of the fibrillated fibre blend. The fibres have a shape which is a crimped rectangular fibre, having branched barbules and hooklets spreading from the barb. In particular, it can be seen that the main fibre body has a plurality of fibrils extending off that body at different locations along its length, and with those fibrils extending in multiple different directions. In particular, when considering the main fibre body as extending in the z direction, then when looking in the x-y plane there are fibrils extending at multiple different angles in that plane, from 0 to 360 degrees. Equally, when considering the angle of the fibrils to the elongate axis of the main fibre body, there are fibrils extending at multiple different angles to that axis, over the range of from greater than 0 to less than 180 degrees.

**Figures 3a****-e** show SEM images of the fibrillation process. **Figure 3a** shows disintegration of the quill. **Figure 3b** shows unfolding of barbs from the quill (rachis). **Figure 3c** shows unfolding of barbules from the bard. **Figure 3d** shows unfolding of hooklets from barbules. **Figure 3e** shows the grinding of the feather into fragments, which increases overall surface area.

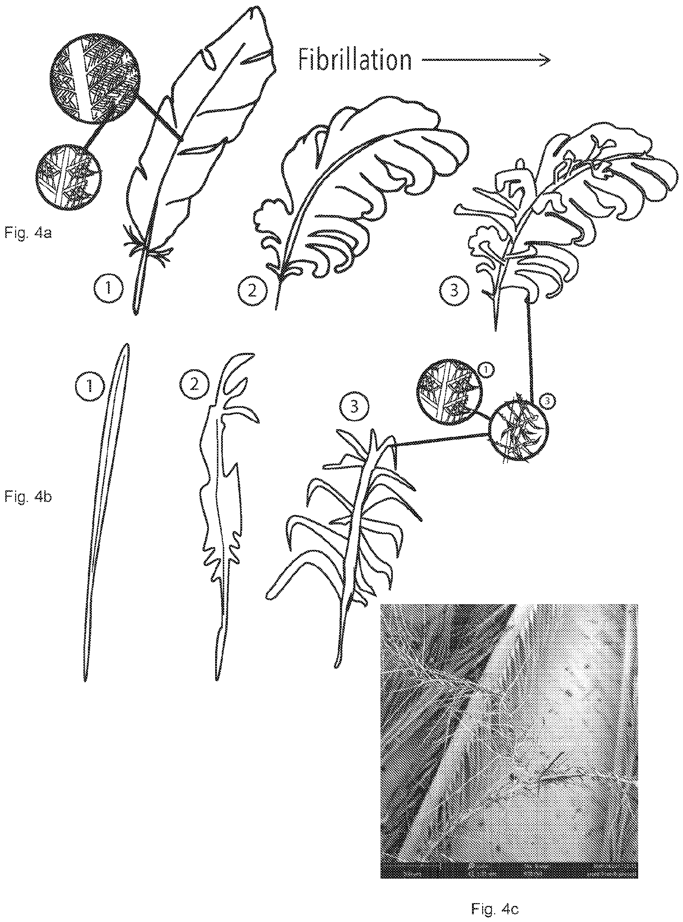

**Figures 4a****-b** illustrate graphically the effect of the fibrillation process and the changing of the feather from a 2D to a 3D feature structure. Figure 4a shows the fibrillation of the feather from a front view. Figure 4b shows the fibrillation of the feather from a side view. **Figure 4c** is an SEM image showing the fibrillation in the feather fibres produced according to the seventh aspect.

### Testing:

The fibre distribution was analysed with a sieve. The fibrillated fibre blend had fibres with a length of from 1mm to 1cm.

The fibrillated fibre blend has a tapped bulk density as measured at room temperature using a Copley Jv2000 Tapped Density machine in the range of from 15 to 30 kg/m³.

The fibrillated fibre blend is thermally stable up to 160 degree Celsius, as measured using the Discovery TGA 55 thermogravimetric analyser from TA Instruments.

### f) Air-laid composite products

The fibrillated fibres can be used in an air-laid non-woven composite product.

The fibrillated fibres have a three dimensional microstructure that allows for the fibres to arrange themselves in a three-dimensional air-laid web in a manner that does not result in fibre-compaction or fibre alignment. This allows desirable densities to be achieved. In addition, the fibrillated feather fibres can be well dispersed in the airflow during an air-laid process, and the feather fibres stay airborne for longer, allowing for improved mixing with polymeric fibres, such as bi-component fibres.

These characteristics make the fibre blend suitable for use in an air-laid non-woven composite product.

### Example protocol for air laying:

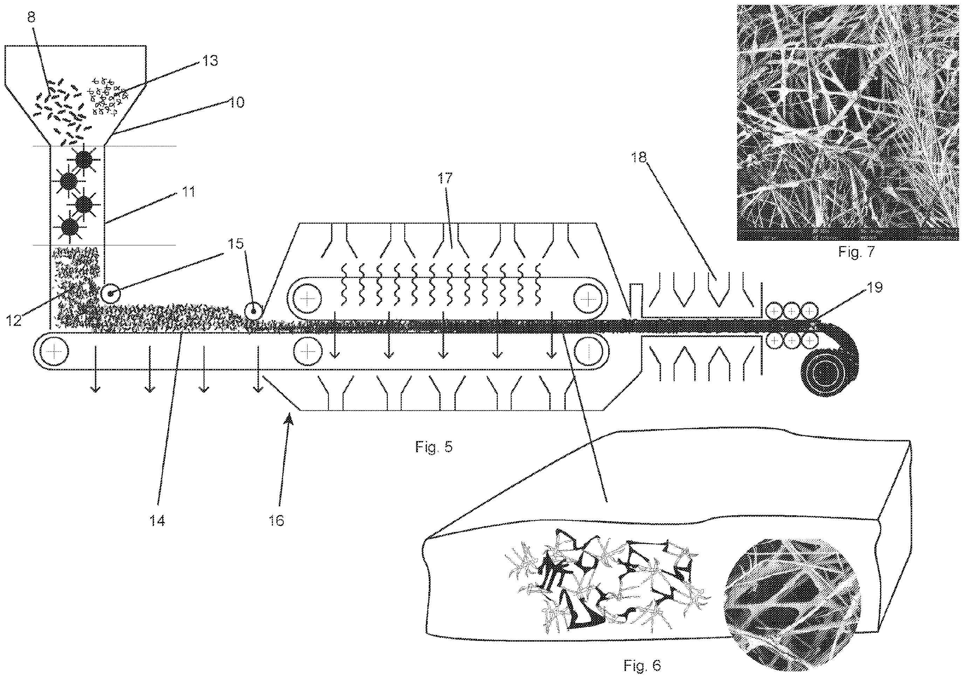

A system for air-laying is illustrated in **Figure 5****.**

The fibrillated fibres 8 are fed directly into the hopped chamber 10 of the air-laid line, which has a fibre opening step via rotary brush belts. The fibrillated fibres are transported onto a weighing system and are then air carded 11 in several steps in mechanical brush carders.

In a forming chamber 12 the fibrillated feather fibres 8 are mixed with bi-component fibres 13 via vortex air streams. The mixture is distributed via air suction onto a revolving vacuum belt 14. The bi-component fibres are of the sheath-core type and have an outer layer of lower melting point polymer (polyethylene) and an inner core of higher melting point polymer (polypropylene).

A calendaring roll 15 compacts the composite material mixture on the belt and therefore can be used to adjust the depth of the composite material.

A double belt oven 16 is used to thermally treat, and thus melt the outer layer of the bi-component fibres, meaning the feather fibres 8 can interlock with the bi-component fibres 13. The temperature used is about 150 degrees C. The belt speed is 0.5-8m per minute.

**Figure 6** is a close up schematic of the air-laid composite material as produced, together with an SEM image of said air-laid composite material. It can be seen that the bi-component fibres are connected to the fibrillated feather fibres.

The air flow of the jets 17 can be adjusted according to the depth of the composite material and the content of bi-component fibre.

The desired surface finish is achieved by a pressing step 18.

The composite product 19 is thus formed and is shown in Figure 5 as a rollable sheet. A cutter is used to cut the composite product into desired sizes.

**Figure 7** is an SEM of the air-laid composite product as produced by the process. It can be seen that the bi-component fibres are fused with the fibrillated feather fibres.

### Testing/characteristics of product:

The produced air-laid non-woven composite product can be cut into desired sizes using a knife or scissors.

The density of the produced composite products ranged from 15kg/m³ to 200kg/m³.

| **Product class** | **Depth (cm)** | **Density (kg/m³)** |
|---|---|---|
| Board | 0.5-3 | 80-200 |
| Rollable layer | 1-3 | 15-40 |
| Mat | 3-5 | 30-60 |
| Batt-type | 5-14 | 40-70 |

The thermal conductivity values, as measured with a hot disk thermal conductivity sensor, were in the range of 0.028-0.031 WmK. The air-laid non-woven composite products therefore have excellent thermal characteristics.

The air-laid products made by the invention have a uniform distribution of the fibrous material. The fibrillated feather fibres were well dispersed in the airflow during the air-laid process, with clumping of fibres in the air carding process being avoided. Further, the feather fibres stayed airborne for a longer amount of time as compared using whole feathers. This allowed for improved mixing with the bi-component fibres.

In addition, air-laid non-woven products were able to be produced within the optimal density range of 40-50 kg/m³

## Claims

1. A process comprising the steps of:
a) providing whole feathers in a non-chemically treated form;
b) washing, and optionally disinfecting, the whole feathers as obtained from step a) with an aqueous liquid at elevated temperature, to obtain whole washed feathers;
c) drying the whole washed feathers as obtained from step b) to obtain whole dried feathers;
d) milling the whole dried feathers as obtained from step c),
wherein either:
(i) the process is for obtaining fibrillated fibres comprising keratin, and the milling is with a hammer mill using a plurality of rotating hammers to force the feathers against a curved grinding surface having raised teeth, wherein each rotating hammer has a hammer tip and the minimum clearance as a hammer tip passes over the grinding surface defines a grinding gap, wherein the grinding gap is from 1mm to 6mm, and whereby milled feather material is forced out of the mill through screen perforations by the action of the rotating hammers, whereby the screen perforations are substantially circular with a diameter of from 3mm to 10mm, so as to obtain a fibrillated fibre blend comprising both fibrillated feather barb material and fibrillated feather quills;
or
(ii) the process is for obtaining a powder comprising keratin, and the milling is with a mill having a grinding action so as to obtain powdered feather barb material together with whole feather quills, wherein the powdered feather barb material has a particle size distribution such that its particles are all sized within the range of from 50 to 850 µm; and wherein the process comprises separating the powdered feather barb material from the whole feather quills.

2. A fibrillated fibre blend comprising both fibrillated feather barb material and fibrillated feather quills, wherein either the blend is obtainable by the process of claim 1 wherein option (i) applies or the blend has been obtained by the process of claim 1 wherein option (i) applies.

3. The use of the fibrillated fibre blend of claim 2, wherein the use is as:
a) a biodegradable filler;
b) an insulation additive;
c) a packaging material;
d) a flame retardant material; or
e) the fibrous material in an air-laid product.

4. A process for obtaining a composite product, comprising:
i) providing a fibrillated fibre blend according to claim 2;
ii) combining the fibrillated fibre blend with a binder to form a composite material; and
iii) processing the composite material to form a composite product.

5. The process of claim 4, wherein:
a) step (i) of claim 4 comprises carrying out the process of claim 1 wherein option (i) of claim 1 applies to obtain a fibrillated fibre blend; and/or
b) the process comprises moulding or forming the composite material or the composite product into a shaped article; and/or
c) the process is an air-laid manufacturing process.

6. The process of claim 5, option c), wherein the process comprises:
i) forming the fibre blend into a web, applying thermoplastic binder to the web, and carrying out a thermal treatment to bind the fibres together; or
ii) forming the fibre blend into a web by air carding, applying thermoplastic binder to the web, and carrying out a thermal treatment to bind the fibres together.

7. The process of any one of claims 4 to 6, wherein the binder is:
a) a thermoplastic binder which is provided in the form of a liquid or in the form of a polymeric fibre; and/or
b) a bi-component polymeric fibre.

8. A composite product as obtained by the process of any one of claims 4 to 7.

9. The composite product of claim 8, wherein the product has a density of from 40 to 50 kg/m³.

10. The process of claim 1 wherein option (ii) applies, and wherein in step d) the milling is carried out by:
i) a ball mill, a roller mill or a rod mill; or
ii) a ball mill; or
iii) a ball mill, where the milling speed is in the range of from 20 to 50rpm; or
iv) a ball mill, where the milling container is filled with a quantity of feathers plus milling media that is 50% or less of the milling container by volume; or
v) a ball mill, where the milling container is filled with a quantity of feathers plus milling media that is from 5 to 40% of the milling container by volume.

11. The use of powder as obtained by the process of claim 1 wherein option (ii) applies, or claim 10, wherein the use is as:
a) biodegradable filler; or
b) an insulation additive; or
c) packaging material; or
d) a water-repellent additive.

12. A process for obtaining biodegradable filler, an insulation material, a packaging material or a water-repellent material, the process comprising carrying out the process of claim 1 wherein option (ii) applies, or claim 10, wherein:
a) the process is for obtaining biodegradable filler and in step d) the milling is carried out so as to obtain powdered feather barb material that has a particle size distribution such that its particles are all sized within the range of from 50 to 300 µm; or
b) the process is for obtaining an insulation material and in in step d) the milling is carried out so as to obtain powdered feather barb material that has a particle size distribution such that its particles are all sized within the range of from 600 to 850 µm; or
c) the process is for obtaining a packaging material and in step d) the milling is carried out so as to obtain powdered feather barb material that has a particle size distribution such that its particles are all sized within the range of from 600 to 850 µm; or
d) the process is for obtaining a water-repellent material and in step d) the milling is carried out so as to obtain powdered feather barb material that has a particle size distribution such that its particles are all sized within the range of from 50 to 300 µm.

13. The process of claim 12, wherein:
i) option a) applies and the powdered feather barb material is combined with a resin and/or binder in liquid or powder form; or
ii) option b) applies and the powdered feather barb material is combined with a polymer, such as an expanded polymer or a powdered polymer; or
iii) option c) applies and the powdered feather barb material is combined with a polymer and formed into a packaging article; or
iv) option d) applies and the powdered feather barb material is combined with a building material, such as concrete, polymer, or fibreboard, to create a hydrophobic material; or
v) option d) applies and the powdered feather barb material is combined with paint, or is added during the production of paint, to create a hydrophobic paint.

## Patentansprüche

1. Verfahren, umfassend die Schritte:
a) Bereitstellen von ganzen Federn in einer nicht chemisch behandelten Form;
b) Waschen und gegebenenfalls Desinfizieren der bei Schritt a) erhaltenen ganzen Federn mit einer wässrigen Flüssigkeit bei erhöhter Temperatur, um gewaschene ganze Federn zu erhalten;
c) Trocknen der bei Schritt b) erhaltenen gewaschenen ganzen Federn, um getrocknete ganze Federn zu erhalten;
d) Mahlen der bei Schritt c) erhaltenen getrockneten ganzen Federn,
wobei entweder:
(i) das Verfahren zum Erhalten von fibrillierten Fasern, die Keratin umfassen, ist und das Mahlen mit einer Hammermühle erfolgt, die eine Vielzahl von sich drehenden Hämmern umfasst, um die Federn gegen eine gekrümmte Mahloberfläche, die erhöhte Zähne aufweist, zu drücken, wobei jeder sich drehende Hammer eine Hammerspitze aufweist und der kleinste Freiraum, wenn die Hammerspitze an der Mahloberfläche vorbeitritt, einen Mahlspalt definiert, wobei der Mahlspalt von 1 mm bis 6 mm beträgt, und wobei gemahlenes Federmaterial durch die Wirkung der sich drehenden Hämmer durch Sieböffnungen aus der Mühle gedrückt wird, wobei die Sieböffnungen im Wesentlichen kreisförmig mit einem Durchmesser von 3 mm bis 10 mm sind, um ein fibrilliertes Fasergemisch zu erhalten, das sowohl fibrilliertes Federfahnenmaterial als auch fibrillierte Federkiele umfasst; oder
(ii) das Verfahren zum Erhalten eines Pulvers, das Keratin umfasst, ist und das Mahlen mit einer Mühle mit einer Schleifwirkung erfolgt, um pulverförmiges Federfahnenmaterial zusammen mit ganzen Federkielen zu erhalten, wobei das pulverförmige Federfahnenmaterial eine Partikelgrößenverteilung aufweist, bei der die Partikel alle eine Größe in dem Bereich von 50 bis 850 µm aufweisen; und wobei das Verfahren Trennen des pulverförmigen Federfahnenmaterials von den ganzen Federkielen umfasst.

2. Fibrilliertes Fasergemisch, umfassend sowohl fibrilliertes Federfahnenmaterial als auch fibrillierte Federkiele, wobei entweder das Gemisch durch das Verfahren gemäß Anspruch 1, wobei Option (i) zutrifft, erhältlich ist oder das Gemisch durch das Verfahren gemäß Anspruch 1, wobei Option (i) zutrifft, erhalten worden ist.

3. Verwendung des fibrillierten Fasergemischs gemäß Anspruch 2, wobei die Verwendung ist als:
a) ein bioabbaubarer Füllstoff;
b) ein Isolationszusatzstoff;
c) ein Verpackungsmaterial;
d) ein flammhemmendes Material; oder
e) das Fasermaterial in einem luftgelegten Produkt.

4. Verfahren zur Herstellung eines Verbundprodukts, umfassend:
i) Bereitstellen eines fibrillierten Fasergemischs gemäß Anspruch 2;
ii) Kombinieren des fibrillierten Fasergemischs mit einem Bindemittel, um ein Verbundmaterial zu bilden; und
iii) Verarbeiten des Verbundmaterials, um ein Verbundprodukt zu bilden.

5. Verfahren gemäß Anspruch 4, wobei:
a) Schritt (i) von Anspruch 4 Durchführen des Verfahrens von Anspruch 1, wobei Option (i) von Anspruch 1 zutrifft, umfasst, um ein fibrilliertes Fasergemisch zu erhalten; und/oder
b) das Verfahren Gießen oder Formen des Verbundmaterials oder des Verbundprodukts zu einem Formkörper umfasst; und/oder
c) das Verfahren ein Luftlege-Herstellungsverfahren ist.

6. Verfahren gemäß Anspruch 5, Option c), wobei das Verfahren umfasst:
i) Formen des Fasergemischs zu einer Bahn, Aufbringen von thermoplastischem Bindemittel auf die Bahn und Durchführen einer Wärmebehandlung, um die Fasern zusammenzubinden; oder
ii) Formen des Fasergemischs zu einer Bahn durch Luftkardieren, Aufbringen von thermoplastischem Bindemittel auf die Bahn und Durchführen einer Wärmebehandlung, um die Fasern zusammenzubinden.

7. Verfahren gemäß einem der Ansprüche 4 bis 6, wobei das Bindemittel ist:
a) ein thermoplastisches Bindemittel, das in der Form einer Flüssigkeit oder in der Form einer Polymerfaser bereitgestellt ist; und/oder
b) eine Zweikomponenten-Polymerfaser.

8. Verbundprodukt, wie erhalten durch das Verfahren gemäß einem der Ansprüche 4 bis 7.

9. Verbundprodukt gemäß Anspruch 8, wobei das Produkt eine Dichte von 40 bis 50 kg/m³ aufweist.

10. Verfahren gemäß Anspruch 1, wobei Option (ii) zutrifft und wobei bei Schritt d) das Mahlen durchgeführt wird durch:
i) eine Kugelmühle, eine Walzenmühle oder eine Stabmühle; oder
ii) eine Kugelmühle; oder
iii) eine Kugelmühle, wobei die Mahlgeschwindigkeit in dem Bereich von 20 bis 50 Upm liegt; oder
iv) eine Kugelmühle, wobei der Mahlbehälter mit einer Menge von Federn plus Mahlmedium gefüllt wird, die 50 Vol.-% oder weniger des Mahlbehälters beträgt; oder
v) eine Kugelmühle, wobei der Mahlbehälter mit einer Menge von Federn plus Mahlmedium gefüllt wird, die von 5 bis 40 Vol.-% des Mahlbehälters beträgt.

11. Verwendung von wie durch das Verfahren gemäß Anspruch 1, wobei Option (ii) zutrifft, oder Anspruch 10 erhaltenem Pulver, wobei die Verwendung ist als:
a) bioabbaubarer Füllstoff; oder
b) Isolationszusatzstoff; oder
c) Verpackungsmaterial; oder
d) wasserabstoßender Zusatzstoff.

12. Verfahren zur Herstellung von bioabbaubarem Füllstoff, eines Isolationsmaterials, eines Verpackungsmaterials oder eines wasserabstoßenden Materials, wobei das Verfahren Durchführen des Verfahrens gemäß Anspruch 1, wobei Option (ii) zutrifft, oder Anspruch 10 umfasst, wobei:
a) das Verfahren zur Herstellung von bioabbaubarem Füllstoff ist und bei Schritt d) das Mahlen durchgeführt wird, um pulverförmiges Federfahnenmaterial zu erhalten, das eine Partikelgrößenverteilung aufweist, bei der die Partikel alle eine Größe in dem Bereich von 50 bis 300 µm aufweisen; oder
b) das Verfahren zur Herstellung eines Isolationsmaterials ist und bei Schritt d) das Mahlen durchgeführt wird, um pulverförmiges Federfahnenmaterial zu erhalten, das eine Partikelgrößenverteilung aufweist, bei der die Partikel alle eine Größe in dem Bereich von 600 bis 850 µm aufweisen; oder
c) das Verfahren zur Herstellung eines Verpackungsmaterials ist und bei Schritt d) das Mahlen durchgeführt wird, um pulverförmiges Federfahnenmaterial zu erhalten, das eine Partikelgrößenverteilung aufweist, bei der die Partikel alle eine Größe in dem Bereich von 600 bis 850 µm aufweisen; oder
d) das Verfahren zur Herstellung eines wasserabstoßenden Materials ist und bei Schritt d) das Mahlen durchgeführt wird, um pulverförmiges Federfahnenmaterial zu erhalten, das eine Partikelgrößenverteilung aufweist, bei der die Partikel alle eine Größe in dem Bereich von 50 bis 300 µm aufweisen.

13. Verfahren gemäß Anspruch 12, wobei:
i) Option a) zutrifft und das pulverförmige Federfahnenmaterial mit einem Harz und/oder Bindemittel in flüssiger oder Pulverform kombiniert wird; oder
ii) Option b) zutrifft und das pulverförmige Federfahnenmaterial mit einem Polymer, wie z.B. einem expandierten Polymer oder einem pulverförmigen Polymer, kombiniert wird; oder
iii) Option c) zutrifft und das pulverförmige Federfahnenmaterial mit einem Polymer kombiniert wird und zu einem Verpackungsgegenstand geformt wird; oder
iv) Option d) zutrifft und das pulverförmige Federfahnenmaterial mit einem Baumaterial, wie z.B. Beton, Polymer oder Faserplatte, kombiniert wird, um ein hydrophobes Material zu erzeugen; oder
v) Option d) zutrifft und das pulverförmige Federfahnenmaterial mit Anstrich kombiniert wird oder bei der Herstellung von Anstrich zugegeben wird, um einen hydrophoben Anstrich zu erzeugen.

## Revendications

1. Procédé comprenant les étapes de :
a) fourniture de plumes entières sous une forme non traitée chimiquement ;
b) lavage, et éventuellement désinfection, des plumes entières obtenues à l'étape a) avec un liquide aqueux à température élevée, pour obtenir des plumes entières lavées ;
c) séchage des plumes entières lavées obtenues à l'étape b) pour obtenir des plumes entières séchées ;
d) broyage des plumes entières séchées obtenues à l'étape c),
soit :
(i) le procédé étant destiné à obtenir des fibres fibrillées comprenant de la kératine, et le broyage étant effectué avec un broyeur à marteaux utilisant une pluralité de marteaux rotatifs pour forcer les plumes contre une surface de broyage incurvée ayant des dents surélevées, chaque marteau rotatif ayant une pointe de marteau et le jeu minimum lorsqu'une pointe de marteau passe sur la surface de broyage définissant un espace de broyage, l'espace de broyage étant de 1 mm à 6 mm, et le matériau de plumes broyé étant forcé hors du broyeur à travers les perforations du tamis par l'action des marteaux rotatifs, les perforations du tamis étant sensiblement circulaires avec un diamètre de 3 mm à 10 mm, de façon à obtenir un mélange de fibres fibrillées comprenant à la fois un matériau de barbes de plumes fibrillées et des piquants de plumes fibrillées ;
soit
(ii) le procédé étant destiné à obtenir une poudre comprenant de la kératine, et le broyage étant effectué avec un moulin ayant une action de broyage de manière à obtenir un matériau de barbes de plumes en poudre conjointement avec des piquants de plumes entiers, le matériau de barbes de plumes en poudre ayant une distribution granulométrique telle que ses particules ont toutes une taille comprise dans la plage de 50 à 850 um ; et le procédé comprenant la séparation du matériau de barbes de plumes en poudre des piquants de plumes entiers.

2. Mélange de fibres fibrillées comprenant à la fois un matériau de barbes de plumes fibrillées et des piquants de plumes fibrillées, soit le mélange pouvant être obtenu par le procédé selon la revendication 1 l'option (i) s'appliquant, soit le mélange ayant été obtenu par le procédé selon la revendication 1 l'option (i) s'appliquant.

3. Utilisation du mélange de fibres fibrillées selon la revendication 2, l'utilisation étant en tant que :
a) une charge biodégradable ;
b) un additif d'isolation ;
c) un matériau d'emballage ;
d) un matériau ignifuge ; ou e) le matériau fibreux dans un produit posé par voie sèche.

4. Procédé d'obtention d'un produit composite, comprenant :
i) la fourniture d'un mélange de fibres fibrillées selon la revendication 2 ;
ii) la combinaison du mélange de fibres fibrillées avec un liant pour former un matériau composite ; et
iii) le traitement du matériau composite pour former un produit composite.

5. Procédé selon la revendication 4,
a) l'étape (i) selon la revendication 4 comprenant la réalisation du procédé selon la revendication 1 l'option (i) selon la revendication 1 s'appliquant pour obtenir un mélange de fibres fibrillées ; et/ou
b) le procédé comprenant le moulage ou la formation du matériau composite ou du produit composite en un article façonné ; et/ou
c) le procédé étant un procédé de fabrication par voie sèche.

6. Procédé selon la revendication 5, option c), le procédé comprenant :
i) la formation du mélange de fibres en une bande, l'application d'un liant thermoplastique sur la bande, et la réalisation d'un traitement thermique pour lier les fibres ensemble ; ou
ii) la formation du mélange de fibres en une bande par cardage à l'air, l'application d'un liant thermoplastique sur la bande, et la réalisation d'un traitement thermique pour lier les fibres ensemble.

7. Procédé selon l'une quelconque des revendications 4 à 6, le liant étant :
a) un liant thermoplastique qui est fourni sous la forme d'un liquide ou sous la forme d'une fibre polymère ; et/ou
b) une fibre polymérique bi-composante.

8. Produit composite tel qu'obtenu par le procédé selon l'une quelconque des revendications 4 à 7.

9. Produit composite selon la revendication 8, le produit ayant une densité de 40 à 50 kg/m³.

10. Procédé selon la revendication 1, l'option (ii) s'appliquant, et, à l'étape d), le broyage étant effectué par :
i) un broyeur à boulets, un broyeur à rouleaux ou un broyeur à barres ; ou
ii) un broyeur à boulets ; ou
iii) un broyeur à boulets, la vitesse de broyage étant comprise entre 20 et 50 tr/min ; ou
iv) un broyeur à boulets, le récipient de broyage étant rempli d'une quantité de plumes plus le milieu de broyage qui représente 50 % ou moins du récipient de broyage en volume ; ou
v) un broyeur à boulets, le récipient de broyage étant rempli d'une quantité de plumes plus le milieu de broyage qui représente de 5 à 40 % du volume du récipient de broyage.

11. Utilisation de la poudre telle qu'obtenue par le procédé selon la revendication 1, l'option (ii) s'appliquant, ou selon la revendication 10, l'utilisation étant en tant que :
a) une charge biodégradable ; ou
b) un additif d'isolation ; ou
c) un matériau d'emballage ; ou
d) un additif hydrofuge.

12. Procédé pour obtenir une charge biodégradable, un matériau d'isolation, un matériau d'emballage ou un matériau hydrofuge, le procédé comprenant la réalisation du procédé selon la revendication 1, l'option (ii) s'appliquant, ou selon la revendication 10,
a) le procédé étant destiné à obtenir une charge biodégradable et, à l'étape d), le broyage étant effectué de manière à obtenir un matériau de barbes de plumes en poudre qui a une distribution granulométrique telle que ses particules ont toutes une taille comprise dans la plage de 50 à 300 um ; ou
b) le procédé étant destiné à obtenir un matériau d'isolation et, à l'étape d), le broyage étant effectué de manière à obtenir un matériau de barbes de plumes en poudre qui présente une distribution granulométrique telle que ses particules ont toutes une taille comprise dans la plage de 600 à 850 um ; ou
c) le procédé étant destiné à obtenir un matériau d'emballage et, à l'étape d), le broyage étant effectué de manière à obtenir un matériau de barbes de plumes en poudre qui présente une distribution granulométrique telle que telle que ses particules ont toutes une taille comprise dans la plage de 600 à 850 um ; ou
d) le procédé étant destiné à obtenir un matériau hydrofuge et, à l'étape d), le broyage étant effectué de manière à obtenir un matériau de barbes de plumes en poudre qui présente une distribution granulométrique telle que telle que ses particules ont toutes une taille comprise dans la plage de 50 à 300 µm.

13. Procédé selon la revendication 12,
i) l'option a) s'appliquant et le matériau de barbes de plumes en poudre étant combiné avec une résine et/ou un liant sous forme liquide ou en poudre ; ou
ii) l'option b) s'appliquant et le matériau de barbes de plumes en poudre étant combiné avec un polymère, tel qu'un polymère expansé ou un polymère en poudre ; ou
iii) l'option c) s'appliquant et le matériau de barbes de plumes en poudre étant combiné avec un polymère et formé en un article d'emballage ; ou
iv) l'option d) s'appliquant et le matériau de barbes de plumes en poudre étant combiné avec un matériau de construction, tel que du béton, un polymère ou un panneau de fibres, pour créer un matériau hydrophobe ; ou
v) l'option d) s'appliquant et le matériau de barbes de plumes en poudre étant combiné avec de la peinture, ou étant ajouté pendant la production de peinture, pour créer une peinture hydrophobe.
